# EUROPÄISCHE PATENTSCHRIFT

(11) **EP 3 147 194 B1**
(45) Veröffentlichungstag und Bekanntmachung des Hinweises auf die Patenterteilung: **20.07.2022**
(21) Anmeldenummer: 16002036.8
(22) Anmeldetag: 20.09.2016
(51) Int. Cl.: B62K 23/02, B62K 21/26, B62K 23/06, B62K 23/04

(54) **ANSTEUEREINRICHTUNG ZUM DRAHTLOSEN ANSTEUERN WENIGSTENS EINER KOMPONENTE EINES FAHRRADS**
CONTROL DEVICE FOR WIRELESS CONTROL OF AT LEAST ONE COMPONENT OF A BICYCLE
DISPOSITIF DE COMMANDE SANS FIL D'AU MOINS UN COMPOSANT D'UN VÉLO

(30) Priorität: 22.09.2015 DE 102015218173; 09.09.2016 DE 102016010801
(43) Veröffentlichungstag der Anmeldung: 29.03.2017
(73) Patentinhaber: SRAM Deutschland GmbH, 97424 Schweinfurt (DE)
(72) Erfinder: Bierwerth, Jochen, 97450 Arnstein (DE); Hamisch, Thorsten, 97273 Kürnach (DE); Linke, Alexander, 97080 Würzburg (DE); Pluimer, Mason, Chicago, IL 60657 (US); Baumann, Sven, 97508 Grettstadt (DE); Frank, Wolfram, 96052 Bamberg (DE); Hilton, Chris, 97539 Wonfurt (DE)

(56) Entgegenhaltungen:
- EP-A1- 2 586 693
- EP-A2- 2 135 804
- DE-U1-202013 002 491
- US-A1- 2014 352 478

## Beschreibung

Gegenstand der Erfindung ist eine Ansteuereinrichtung für ein Fahrrad, welche am Lenker des Fahrrads angeordnet oder anordenbar ist und zur drahtlosen Ansteuerung wenigstens einer elektronischen, elektrischen, elektromechanischen oder elektrohydraulischen Komponente des Fahrrads dient, umfassend:
eine wenigstens ein manuell bedienbares Bedienelement aufweisende Bedienanordnung, welche dafür ausgeführt ist, auf eine Bedienung des Bedienelements anzusprechen und die Bedienung repräsentierende elektrische Signale abzugeben; wenigstens eine elektronische Schaltungsanordnung umfassend eine Funk-Kommunikationsschaltung, eine an der Bedienanordnung angeschlossene oder anschließbare Steuerschaltung und wenigstens eine an der Funk-Kommunikationsschaltung angeschlossene oder anschließbare oder in diese integrierte Antenne, wobei die Steuerschaltung dafür ausgeführt ist, auf Basis von der Bedienanordnung empfangenen elektrischen Signalen vermittels der Funk-Kommunikationsschaltung und der Antenne drahtlose Steuerbefehle an die wenigstens eine elektronische, elektrische, elektromechanische oder elektrohydraulische Komponente des Fahrrads oder an eine mit dieser Komponente leitungsgebunden oder drahtlos verbundene oder verbindbare Kommandoeinheit zu geben.

Aufgrund der erfindungsgemäßen Ausführung der Ansteuereinrichtung mit einer Funk-Kommunikationsschaltung wird gegenüber der herkömmlichen drahtgebundenen Übertragung von Steuerbefehlen vorteilhaft erreicht, dass auf die Verlegung von Übertragungsleitungen für die elektrische Signalübertragung verzichtet werden kann. Es ergibt sich eine wesentlich größere Freiheit für die Anordnung der Ansteuereinrichtung am Lenker. Verbindungskabel, die beschädigt werden könnten, können entfallen und der Fahrradrahmen braucht keine Ausstattung für die Verlegung von Verbindungskabeln etwa in Rohrinnenräumen zu haben.

Im Folgenden geht es um Ausführungsmöglichkeiten für eine Ansteuereinrichtung.

Gemäß einer ersten nicht beanspruchten bevorzugten Ausgestaltung ist vorgesehen, dass die in einem Raumbereich konzentriert angeordnete oder sich entlang einer vorzugsweise nicht gradlinigen Erstreckungslinie erstreckende elektronische Schaltungsanordnung eine Leiterplattenanordnung aufweist, umfassend wenigstens eine zumindest bereichsweise flexibel ausgeführte Leiterplatte oder mehrere über vorzugsweise flexible Leiter verbundene Leiterplatten. Die konzentrierte Anordnung der elektronischen Schaltungsanordnung in einem Raumbereich als auch die entlang einer Erstreckungslinie sich erstreckende, gewissermaßen entlang der Erstreckungslinie verteilt angeordnete elektronische Schaltungsanordnung ermöglichen eine raumsparende Anordnung der Ansteuereinrichtung an einem Fahrradlenker. Es kann so auch eine für den Radfahrer bzw. potenziellen Radfahrer bzw. Käufer ansprechende Anmutung sowie eine gute Ergonomie für den Radfahrer erreicht werden.

Allgemein wird daran gedacht, dass die Ansteuereinrichtung mehrere miteinander verbundene oder verbindbare Einheiten umfasst. Konkret kann sich die erfindungsgemäße Ansteuereinrichtung durch mehrere drahtlos oder über eine Kabelanordnung verbundene oder verbindbare, an oder im Lenker jeweils als gesonderte Komponenten angeordnete oder anordenbare Einheiten auszeichnen.

Gemäß einer ersten nicht beanspruchten Variante umfasst die Ansteuereinrichtung eine die Bedienanordnung aufweisende Bedieneinheit, eine zumindest die Steuerschaltung und gewünschtenfalls die Funk-Kommunikationsschaltung und eine die Antenne aufweisende Antenneneinheit.

Gemäß einer zweiten nicht beanspruchten Variante umfasst die Ansteuereinrichtung eine die Bedienanordnung aufweisende Bedieneinheit und eine die Steuerschaltung, die Funk-Kommunikationsschaltung und die Antenne aufweisende Steuereinheit.

Gemäß einer dritten nicht beanspruchten Variante umfasst die Ansteuereinrichtung eine die Bedienanordnung und die Steuerschaltung aufweisende erste Einheit und eine die Antenne aufweisende zweite Einheit, wobei die erste oder die zweite Einheit auch die Funk-Kommunikationsschaltung aufweist.

Gemäß einer vierten nicht beanspruchten Variante umfasst die Ansteuereinrichtung eine die Bedienanordnung und die Antenne aufweisende Bedieneinheit und eine die Steuerschaltung aufweisende Steuereinheit wobei die Bedieneinheit oder die Steuereinheit auch die Funk-Kommunikationsschaltung aufweist.

Insgesamt resultieren für den Fahrradkomponentenentwickler viele Freiheitsgrade hinsichtlich konkreter Ausgestaltungen, um designerischen, ergonomischen und anderen Anforderungen zu genügen.

Alternativ kann sich die Ansteuereinrichtung durch eine Einheit auszeichnen, die die Bedienanordnung, die Steuerschaltung, die Funk-Kommunikationsschaltung und die Antenne aufweist und eine am Lenker angeordnete oder anordenbare Komponente bildet. Besonders bevorzugte Ausführungsformen und Ausführungsvarianten zeichnen sich durch eines oder mehrere der im Folgenden angesprochenen Merkmale aus.

Gemäss einer bevorzugten Ausführung ist vorgesehen, dass die elektronische Schaltungsanordnung sich zumindest bereichsweise rings um einen Außenumfang des Lenkers erstreckend angeordnet oder anordenbar ist.

Gemäss einer bevorzugten Ausführung ist die oder wenigstens eine Antenne gegenüber einem Griff des Lenkers in Richtung zu einer Lenkermitte versetzt auf einer Außenseite des Lenkers angeordnet oder anordenbar ist. Für diesen Konstruktionsansatz wird weiter vorgeschlagen, dass die zumindest bereichsweise flexibel ausgeführte Leiterplatte bzw. die über flexible Leiter verbundenen Leiterplatten sich zumindest bereichsweise rings um den Außenumfang des Lenkers erstreckt bzw. sich so erstreckend anordenbar ist/sind. Es wird so der zur Verfügung stehende Bauraum gut ausgenutzt.

Allgemein wird daran gedacht, dass die Antenne von einer/der Leiterplattenanordnung der elektronischen Schaltungsanordnung getragen ist, wobei die Leiterplattenanordnung sich zumindest bereichsweise rings um einen Außenumfang des Lenkers erstreckend angeordnet oder anordenbar ist. Man kann ein die elektronische Schaltungsanordnung und gewünschtenfalls die Antenne aufnehmendes Gehäuse vorsehen, welches auf den Außenumfang des Lenkers aufgesteckt oder aufsteckbar ist.

Betreffend die auf den vorgenannten Konstruktionsansatz zielende Ausgestaltung des Gehäuses für ein Aufstecken auf den Außenumfang des Lenkers wird weiterbildend vorgeschlagen, dass das Gehäuse einen sich um den Lenker erstreckenden ringförmigen oder hülsenförmigen Gehäuseabschnitt aufweist.

Zweckmäßig kann das Gehäuse eine Aufnahme für wenigstens eine auswechselbare Batterie aufweisen, mit der die elektronische Schaltungsanordnung mit elektrischer Energie versorgbar ist. Bei der Batterie kann es sich auch um eine aufladbare Batterie handeln. Die Aufnahme kann durch Öffnen eines Gehäuseverschlusses oder durch Trennen mehrerer gesonderter Gehäuseabschnitte zugänglich sein. In diesem Zusammenhang werden zwei zu dem Gehäuse zusammengesetzte oder zusammensetzbare Gehäuse-Halbschalen als besonders zweckmäßig erachtet.

Eine weitere besonders bevorzugte**,** jedoch nicht beanspruchte Ausführungsform nach diesem Konstruktionsansatz zeichnet sich dadurch aus, dass die elektronische Schaltungsanordnung oder deren Leiterplattenanordnung sich über einen Umfangswinkel von wenigstens 180 Grad, vorzugsweise von wenigstens 240 Grad, höchstvorzugsweise von wenigstens 300 Grad um den Außenumfang des Lenkers erstreckt. Nach dem zweiten Konstruktionsansatz kann man weiter vorteilhaft vorsehen, dass das Gehäuse in einem ersten Umfangswinkelbereich das wenigstens eine Bedienelement und in einem gegenüber dem ersten Umfangswinkelbereich versetzten zweiten Umfangswinkelbereich die Aufnahme für die wenigstens eine Batterie aufweist.

Im Rahmen der Erfindung ist es auch möglich, dass die Ansteuereinrichtung ein außen am Lenker gehaltenes Gehäuse umfasst, welches die elektronische Schaltungsanordnung und die Antenne enthält. Dabei kann zweckmäßig eine das Gehäuse am Lenker fixierende, vorzugsweise den Lenker ringförmig umgebende Befestigungsvorrichtung zum Einsatz kommen. Das Gehäuse kann seitlich von der Befestigungsvorrichtung in Richtung zur Lenkermitte vorstehen. Eine besonders bevorzugte Ausgestaltung zeichnet sich dadurch aus, dass die Befestigungsvorrichtung die Bedienanordnung aufweist.

Eine derartige Ansteuereinrichtung bzw. Betätigungsvorrichtung kann Teil eines elektromechanischen Schaltsystems der aus der EP 2 719 616 A2 oder DE 10 2013 016 777 A1 bekannten Art sein und nach den in diesen Veröffentlichungen offenbarten Verfahren und Protokollen arbeiten. Speziell kann die erfindungsgemäße Ansteuereinrichtung oder Betätigungsvorrichtung als linke oder rechte Schalteinheit ("left shift unit", "right shift unit") gemäß der Offenbarung der EP 2 719 616 A2 dienen und entsprechend ausgeführt sein, um Schaltzustände wenigstens einer elektromechanischen Gangschaltungseinrichtung zu steuern bzw. zwischen verschiedenen Gängen umzuschalten, bspw. eines vorderen elektromechanischen Umwerfers und eines hinteren elektromechanischen Umwerfers einer elektromechanischen Kettenschaltung eines Fahrrads.

Beispiele für eine im Prinzip durch eine erfindungsgemäße Ansteuereinrichtung bzw. Betätigungsvorrichtung steuerbare Schaltwerke geben die ein vorderes Schaltwerk zeigende DE 10 2013 017 154 A1 und die ein hinteres Schaltwerk zeigende DE 10 2013 015 946 A1. Ein solches vorderes Schaltwerk und ein solches hinteres Schaltwerk kann mittels der Funk-Kommunikationsschaltung mit einer erfindungsgemäßen Ansteuereinrichtung gepaart werden, um die Ansteuereinrichtung mit einem bestimmten Schaltwerk zu koppeln. Es kann bspw. die elektronische Schaltungsanordnung der Ansteuereinrichtung und eine elektronische Schaltungsanordnung des Schaltwerks jeweils mit einem Paarungs-Betätigungselement ("Pairing"-Betätigungselement) ausgeführt sein, um die Ansteuereinrichtung und das Schaltwerk einander zuzuordnen.

Dokument EP2586693A1 zeigt die Präambel des Anspruchs 1.

Man kann vorsehen, dass die Ansteuereinrichtung und das Schaltwerk sowie - wenn vorgesehen - gegebenenfalls eine zwischengeschaltete Kommandoeinheit für eine bidirektionale drahtlose Signalübertragung ausgeführt sind, so dass die jeweils angesteuerte Komponente Bestätigungssignale oder ähnliches zurückmelden kann.

Soweit hier davon die Rede ist, dass die Ansteuereinrichtung an oder in einem Lenker eines Fahrrads angeordnet oder anordenbar ist, und soweit auf einen hohlen Abschnitt des Lenkers bzw. den Außenumfang des Lenkers oder ein Ende des Lenkers Bezug genommen wird, so ist darauf hinzuweisen, dass der Begriff "Lenker" sehr allgemein zu verstehen ist. Primär ist diejenige Fahrradkomponente gemeint, die auch als Handhalterung bezeichenbar ist und mit der Gabel des Fahrrads verbunden und mit dieser gemeinsam drehbar gelagert ist und zur Steuerung des Fahrrads (vor allem bei langsamer Fahrt) dient und in diversen Formen üblich ist, etwa als sogenannter Standardlenker, MTB-Lenker, Rennlenker, Zeitfahrlenker, BMX-Lenker, Kunstfahr-Lenker, Radball-Lenker, Büffellenker und Kombi-Lenker. Es wird auf die entsprechenden Stichworte und teilweise erwähnten Lenker-Untertypen in dem Fachbuch "Smolik, Etzel: Das große Fahrradlexikon; Technik, Praxis, Material von A bis Z", 1997, Bielefelder Verlagsanstalt GmbH & Co KG, erste Auflage verwiesen. Der Begriff "Lenker" soll aber auch sogenannte "Lenkeradapter" und "Lenkeraufsätze" erfassen, nämlich etwa an dem eigentlichen Lenker aufgeschraubte oder angeklemmte Verlängerungen oder Aufsätze zur Vermehrung der Griffmöglichkeiten für den Radfahrer und zur Ermöglichung spezieller Positionen. Als Beispiele seien sogenannte "Bar Ends" und sogenannte "Triathlon Lenker" oder "Tria-Bügel" (Trialenker) genannt.

Schließlich sollen auch der im Steuerrohr des Rahmens aufgenommene Gabelschaft (auch als Gabelschaftrohr bezeichnet) und der den Lenker mit dem Gabelschaft verbindende Vorbau mit zugehörigen Komponenten wie Vorbaukappe und Schelle durch den Begriff "Lenker" mit angesprochen sein.

Trotz dieses hier zu Grunde gelegten sehr allgemeinen Verständnisses des Begriffs "Lenker" wird im Zusammenhang mit bevorzugten Ausgestaltungen der erfindungsgemäßen Ansteuereinrichtung aber primär an den Lenker im engeren Sinne und die angesprochenen Lenkeradapter und Lenkeraufsätze gedacht, die als Handhalterung und zum Abstützen eines Teils des Fahrergewichts über die Hände bzw. Arme des Radfahrers dienen und in vielfältigen Ausgestaltungen verwendet werden. Ohne Beschränkung der Allgemeinheit wird auf in der US 7,207,237 B2, der DE 20 2013 004 765 U1, EP 2 703 275 A2, EP 2 253 531 B1 und EP 1 582 452 B1 offenbarte Lenker und Lenkeradapter bzw. Lenkeraufsätze verwiesen. Betreffend einen durchaus für die Anordnung einer erfindungsgemäßen Ansteuereinrichtung oder von wenigstens einem Teil davon geeigneten Vorbau wird ohne Beschränkung der Allgemeinheit auf die US 2010/0127030 A1 verwiesen.

Die Erfindung und die vorstehend angesprochenen Konstruktionsansätze und Ausführungsmöglichkeiten werden im Folgenden anhand mehrerer Ausführungsbeispiele erläutert, unter Bezugnahme auf die beigefügten Figuren.

Die in den Figuren 1 bis 13 gezeigten Ausführungen sind vom Schutzbereich der Ansprüche nicht mehr erfasst.
- Figur 1: zeigt ein nicht beanspruchtes Beispiel einer Ansteuereinrichtung, die eine an einem Fahrradlenker angeordnete Griffeinheit umfasst.
- Figur 2: zeigt die Griffeinheit in der Art einer Explosionsdarstellung, mit einem am Lenker anzubringenden hülsenartigen Haltungselement mit einem integrierten Bedienhebel und einem gesondert dargestellten, gemäß Fig. 1 auf dem Außenumfang des Haltungselements sitzenden hülsenartigen Griffgummielement.
- Figur 3: zeigt in der Art einer Explosionsdarstellung den Lenker mit einem Klemmring, der aus dem Haltungselement und dem Griffgummielement gebildeten Griffeinheit, einer zugeordneten, zumindest teilweise in den Lenkerinnenraum aufzunehmenden Elektronikeinheit, einem weiteren Klemmring und einer Abdeckkappe, die im fertig montierten Zustand die Anordnung gemäß Fig. 1 bilden.
- Figur 4: ist eine Querschnittsansicht der Anordnung gemäß Fig. 1.
- Figur 5: zeigt die Anordnung gemäß Fig. 3 ohne die Griffeinheit, mit einer Explosionsdarstellung der Elektronikeinheit.
- Figur 6: zeigt in den Teilfiguren 6a und 6b eine nicht beanspruchte alternative Ansteuereinrichtung, die die gleiche Elektronikeinheit in Verbindung mit einem normalen Lenkergriff und einer gesonderten Bedieneinheit am Lenkerende verwendet. Figur 6a zeigt eine Explosionsdarstellung entsprechend Fig. 5. Figur 6b zeigt die Elektronikeinheit und Bedieneinheit im zusammengesteckten bzw. in das Lenkerrohr eingesteckten Zustand ohne einen zugehörigen Lenkergriff.
- Fig. 7 - 13: zeigen schematisch weitere nicht beanspruchte Ausführungsvarianten.
- Figur 14: zeigt eine erfindungsgemässe Ansteuereinrichtung, die eine an einem Fahrradlenker angeordnete, den Lenker ringförmig umschließende Einheit mit einem integrierten Bedienhebel zeigt.
- Figur 15: zeigt eine Explosionsansicht der Anordnung gemäß Fig. 14, mit dem Lenker, einem Klemmring, der angesprochenen Einheit mit integriertem Bedienhebel und einem gesonderten Griffelement.
- Figur 16: zeigt die Komponenten der Fig. 15 in einer Explosionsdarstellung in einem die Komponenten stärker zerlegenden Zustand aus einer anderen Sichtrichtung.
- Figur 17: zeigt schematisch eine Leiterplattenanordnung der den Bedienhebel aufweisenden Einheit.
- Fig. 18-23: zeigen weitere Ausführungsvarianten und Ausführungsbeispiele.
- Figur 24: zeigt ein weiteres Ausführungsbeispiel der erfindungsgemäßen Ansteuereinrichtung, die zusammen mit einem Bremshebel mittels Schelle und Adapter am Fahrradlenker montiert ist.
- Figur 25a: zeigt die Ansteuereinrichtung aus Figur 24 zusammen mit der Schelle und dem Adapter im nicht am Lenker montierten Zustand.
- Figur 25b: zeigt die Ansteuereinrichtung aus Figur 25a ohne die Schelle
- Figur 25c: zeigt die Ansteuereinrichtung aus Figur 25b ohne das Bedienelement.
- Figur 25d: zeigt nur das Bedienelement der Ansteuereinrichtung.
- Figur 26: zeigt ein weiteres Ausführungsbeispiel der erfindungsgemäßen Ansteuereinrichtung mit einer alternativen Schellenausführung zur Befestigung am Lenker.

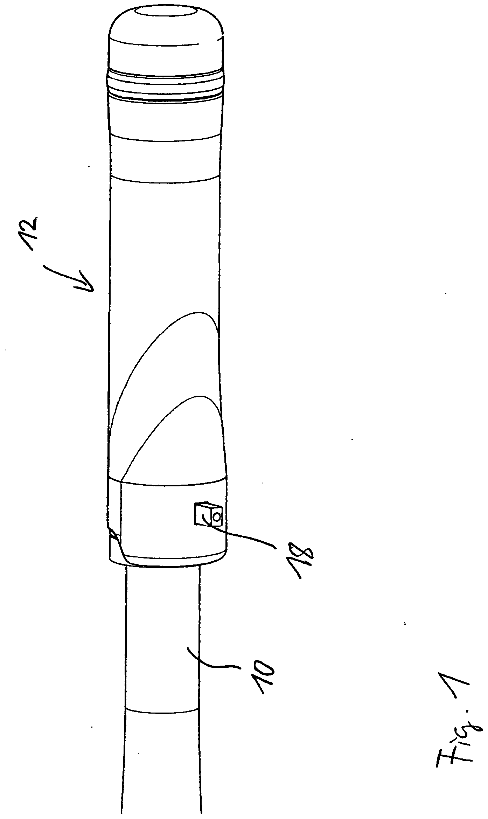

Ein erstes nicht beanspruchtes Ausführungsbeispiel einer Ansteuereinrichtung für ein Fahrrad ist in den Figuren 1 bis 5 in verschiedenen Ansichten dargestellt. Zu erkennen ist ein Lenker 10, der gemäß Fig. 1 mit einem Griff 12 ausgestattet ist, vorliegend mit dem rechten Griff aus Sicht des Fahrrad fahrenden Radfahrers.

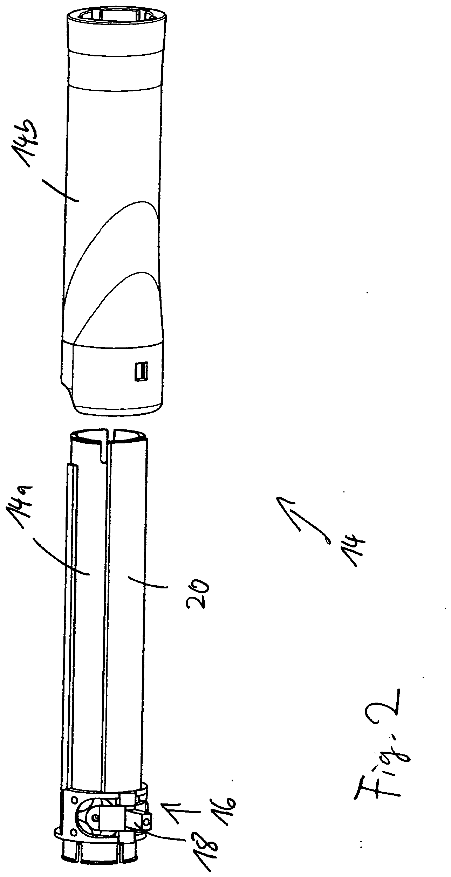

Ein wesentlicher Bestandteil des Griffes 12 ist eine in Fig. 2 dargestellte Griffeinheit 14, die von einem hülsenartigen Haltungselement 14a und einem außen von diesem Haltungselement getragenen hülsenartigen Griffgummielement 14b gebildet ist.

Das hülsenartige Haltungselement 14a ist in seinem vom Lenkerende entfernten Endbereich mit einer elektrischen Bedienanordnung 16, hier einer Bedienhebelanordnung 16 ausgestattet, die einen in Umfangsrichtung verschwenkbaren Bedienhebel 18 aufweist, mit dem der Radfahrer Steuerbefehle an eine elektronische, elektrische, elektromechanische oder elektrohydraulische Komponente des Fahrrads geben kann, bspw. an eine elektromechanische Kettenschaltung des Fahrrads. Der Bedienhebel 18 kann auch anders ausgestaltet sein, bspw. mit einem ergonomischen Anforderungen genügenden freien Ende, an dem bspw. der Radfahrer mit seinem Daumen eingreifen kann, um den Bedienhebel 18 in entgegengesetzte Betätigungsrichtungen zu betätigen. Der Hebel könnte zusätzlich oder alternativ auch in anderen Schwenkrichtungen schwenkbar sein. Alternativ könnte eine Druckknopfbedienung vorgesehen sein.

Ein mit der elektrischen Bedienhebelanordnung noch auszurüstender Hülsenkörper 20 des hülsenartigen Haltungselements 14a kann mit dem Griffgummielement 14b durch Koextrusion hergestellt sein, in Abweichung von der in Fig. 2 gezeigten zweiteiligen Ausgestaltung.

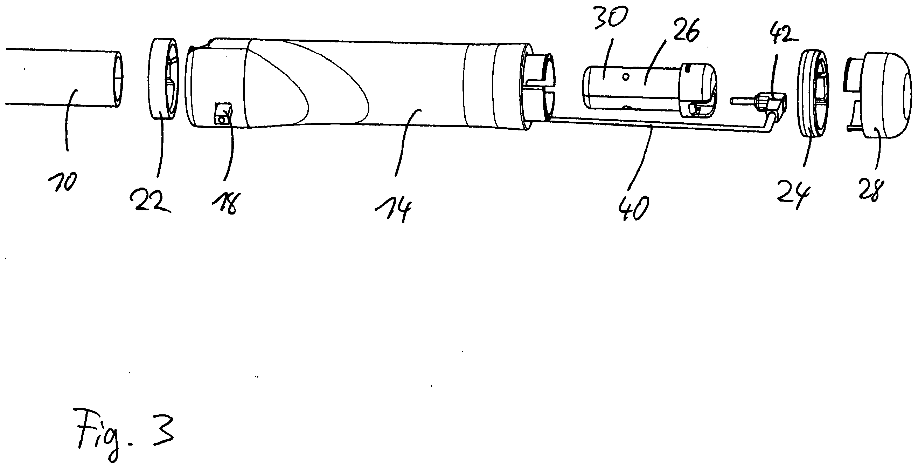

Fig. 3 zeigt eine Explosionsansicht der Anordnung gemäß Fig. 1. Zu erkennen sind zwei die Griffeinheit 14 am Lenker sichernde Klemmringe 22 und 24 und eine in das Lenkerinnere einzusteckende Elektronikeinheit 26 und eine Abdeckkappe 28, die durch den Klemmring 24 an einem dem Lenkerende zugeordneten Endbereich des hülsenartigen Haltungselements 14a gesichert wird.

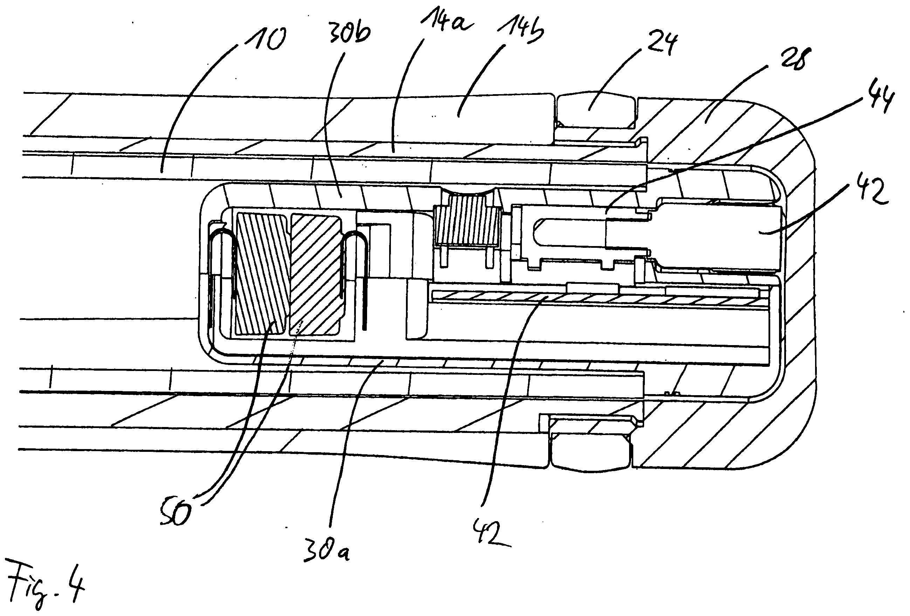

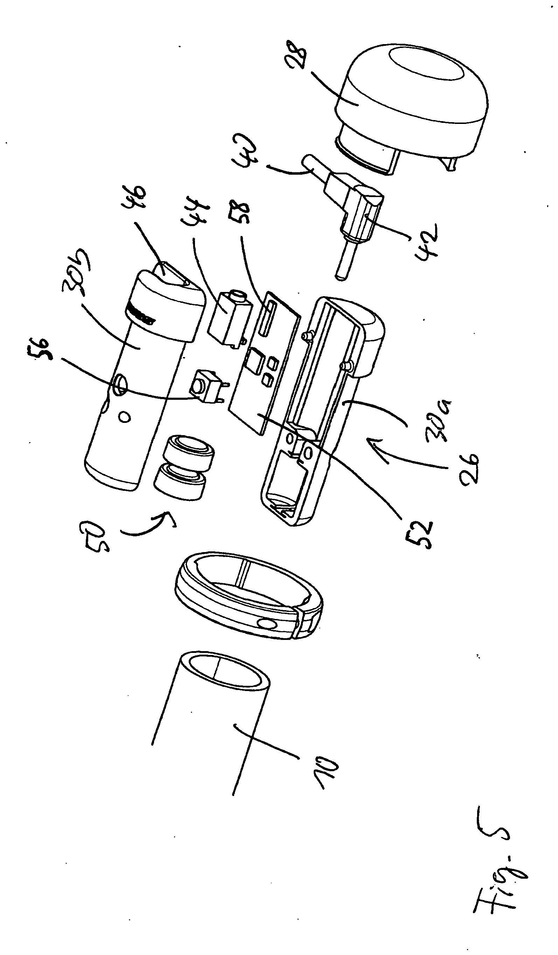

Wie in der Schnittansicht der Fig. 4 zu erkennen, steht die Elektronikeinheit 26 mit einem Abschnitt größeren Durchmessers aus dem Ende des Lenkerrohrs 10 hervor und ist durch die Abdeckkappe 28 abgedeckt und geschützt. Die Elektronikeinheit 26 weist ein Gehäuse 30 auf, mit zwei Halbschalen 30a und 30b, die eine elektronische Schaltungsanordnung mit einer Funk-Kommunikationsschaltung und einer Antenne aufnehmen. Hierzu wird ergänzend auf Fig. 5 verwiesen.

Die elektrische Bedienhebelanordnung 16 ist über ein durch eine Kabelführung des hülsenartigen Haltungselements 14a geführtes elektrisches Verbindungskabel 40, welches in einem elektrischen Steckverbinder 42 endet, mit der Elektronikeinheit 26 verbunden. Hierzu ist der elektrische Steckverbinder 42 in eine elektrische Steckverbinderaufnahme 44 im Inneren des Gehäuses 30 gesteckt, wofür das Gehäuse in dem Endbereich größeren Durchmessers mit einer Einstecköffnung 46 ausgeführt ist.

Wesentliche Komponenten der Elektronikeinheit 26 sind eine von einem Energiespeicher 50, im Beispielsfall von zwei Knopfzellen 50 gebildete elektrische Energieversorgung, eine Leiterplatte 52, die die elektronische Schaltungsanordnung mit der Funk-Kommunikationsschaltung und der Antenne trägt, samt der elektrischen Steckverbinderaufnahme 44 und einem "Pairing"-Druckknopf 56, der zur gegenseitigen Zuordnung im Sinne eines sogenannten "Pairing" der Ansteuereinrichtung und der zugeordneten elektronischen, elektrischen, elektromechanischen oder elektrohydraulischen Komponente des Fahrrads dient. In Fig. 5 ist die Antenne mit 58 bezeichnet. Wie sich aus Fig. 5 in Verbindung mit Fig. 4 ergibt, ist die Antenne in dem außerhalb des Lenkers angeordneten Endbereich vergrößerten Durchmesser der Elektronikeinheit angeordnet, für eine gute Funk-Kommunikationsverbindung mit der anzusteuernden Komponente des Fahrrads. Die Abdeckkappe 28 ist hierzu aus einem für Funkwellen gut durchlässigen Material, etwa einem Kunststoffmaterial, hergestellt.

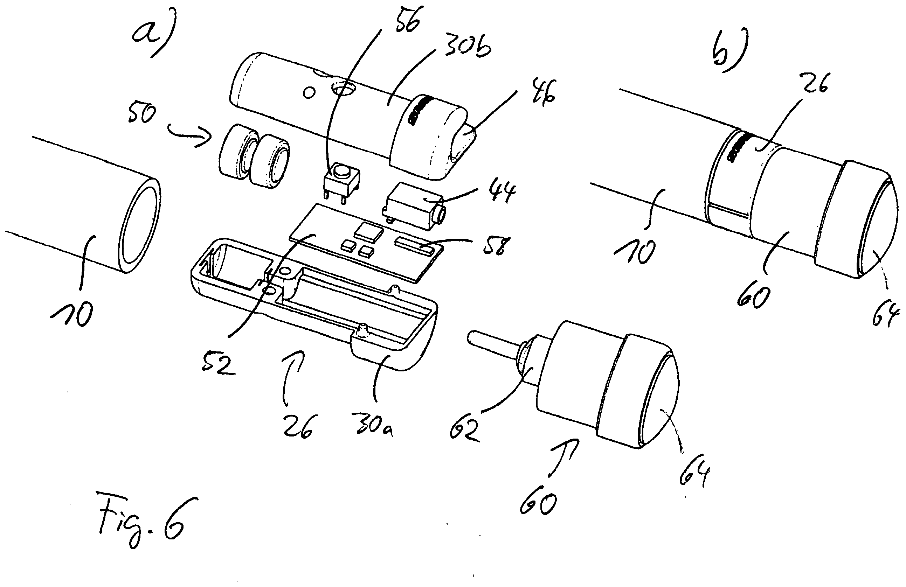

Die Elektronikeinheit 26 kann auch ohne die Griffeinheit 14 verwendet werden, bspw. in Kombination mit einer vom Griff unabhängigen Bedieneinheit 60, die mit einem integrierten Steckverbinder 62 ausgeführt sein kann und von außen unmittelbar in die Einstecköffnung 46 zur Herstellung der elektrischen Verbindung mit der Steckverbinderaufnahme 44 einsteckbar ist, woraus die in Fig. 6b gezeigte Anordnung resultiert. Die Einzelkomponenten sind in Fig. 6a in einer Darstellung entsprechend Fig. 5 gezeigt. Am freien Ende der Bedieneinheit 60 ist ein Bedienelement 64, bspw. ein Bedienknopf 64, vorgesehen, mit dem Steuerbefehle für die anzusteuernde elektronische, elektrische, elektromechanische oder elektrohydraulische Komponente des Fahrrads gegeben werden können.

Regelmäßig wird man die Anordnung gemäß Fig. 6 noch mit einem Lenkergriff versehen, der dann vorzugsweise nicht nur den Endbereich des Lenkers 10 sondern auch den Abschnitt vergrößerten Durchmessers der Elektronikeinheit 26 und den benachbarten Abschnitt gleichen Durchmessers der Bedieneinheit 60 abdeckt.

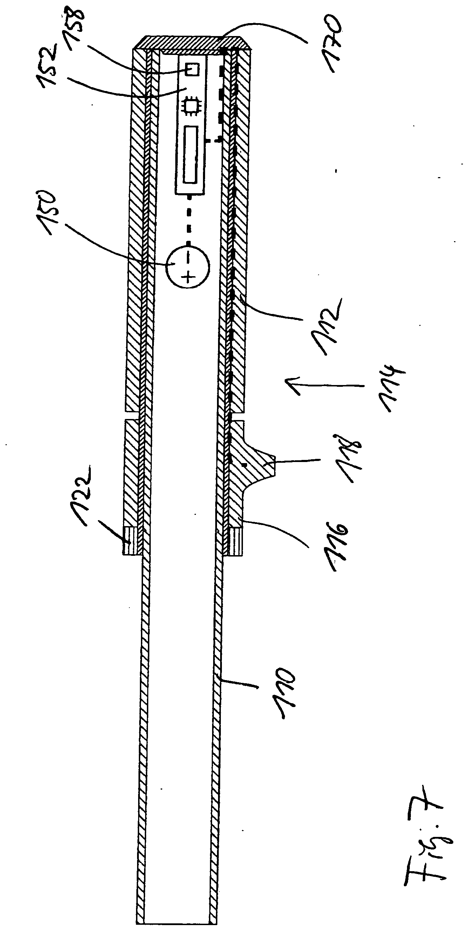

Die Figuren 7 bis 13 zeigen schematisch weitere nicht beanspruchte Ausführungsbeispiele und Ausführungsvarianten. Es werden jeweils die gleichen Bezugszeichen wie in den Figuren 1 bis 6 verwendet, jeweils vermehrt um 100, und es werden jeweils nur die Unterschiede gegenüber dem vorangehend schon beschriebenen Ausführungsbeispiel bzw. den vorangehend schon beschriebenen Ausführungsbeispielen bzw. die Besonderheiten erläutert. Gemäß der in Fig. 7 gezeigten Variante ist die Elektronikeinheit, repräsentiert durch ihre Leiterplatte 152 und eine Batterie 150, vollständig in den Innenraum des hohlen Lenkers 110 in dessen Endbereich aufgenommen. Nach außen hin ist der Hohlraum durch eine Deckelkapppe 170 verschlossen. Gestrichelt dargestellt sind elektrische Verbindungen, einerseits zwischen der Leiterplatte 152 und der Batterie 150 und andererseits zwischen der Leiterplatte 152 und einer Bedienanordnung 116, hier einer Bedienhebelanordnung 116 des Lenkergriffs 112 mit einem Bedienhebel 118. Die Leiterplatte 152 trägt eine elektronische Steuerschaltung mit einer Funk-Kommunikationsschaltung und einer Antenne 158.

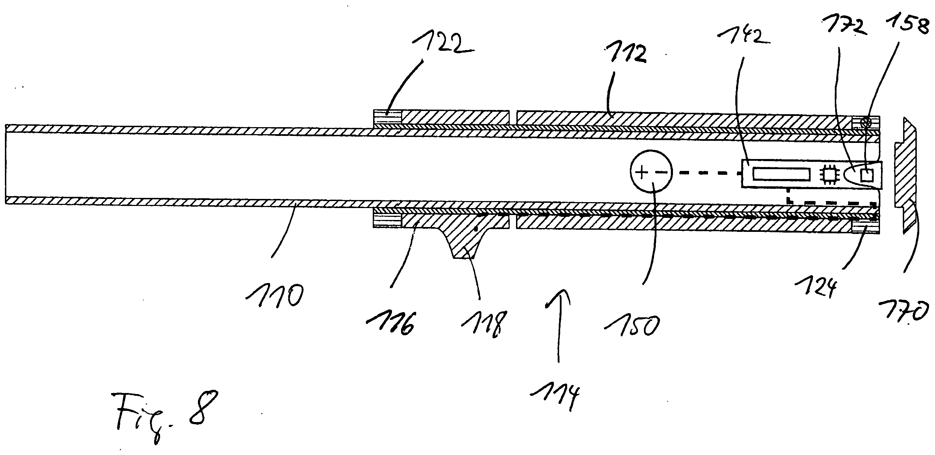

Die Verbindungsleitung von der Leiterplatte 152 zur Bedienhebelanordnung 116 ist aus dem Lenkerrohr herausgeführt und durch eine in den Griff integrierte Kabelführungsanordnung zur Bedienhebelanordnung 116 geführt. Wie in Fig. 8 dargestellt, kann der Lenker 110 in seinem Endbereich mit einer radial offenen Aussparung 172 ausgeführt sein, für einen verbesserten Austritt von Funkwellen aus dem Lenkerrohr und - im Fall einer bidirektionalen Funkverbindung - für einen verbesserten Eintritt von Funkwellen in den Lenkerinnenraum. Bei hinreichender Sendeleistung reicht aber die Funkankopplung über das offene Ende des Lenkerrohrs aus, wofür die Deckelkappe 170 natürlich aus einem funkwellendurchlässigen Material hergestellt sein sollte.

Fig. 8 unterscheidet sich von Fig. 7 auch dahingehend, dass ein Klemmring 124 dargestellt ist, der die Griffeinheit 114 am Lenker sichert. Die Anordnungen gemäß Fig. 7 und Fig. 8 kann man auch so ausführen, dass die Elektronikeinheit integraler Bestandteil einer die Deckelkappe ersetzenden oder umfassenden Lenkerend-Abdeckung ist.

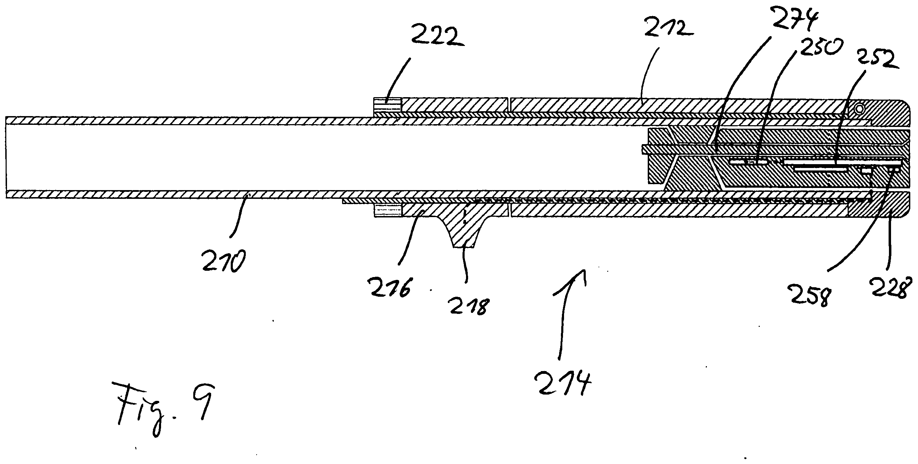

Fig. 9 zeigt eine nicht beanspruchte Ausführungsvariante, bei der die Elektronikeinheit mittels einer speziellen Haltungsanordnung 274 im Lenkerinnenraum gehalten ist. Die Antenne ist außerhalb des Lenkers angeordnet. In diesem Bereich ist die Elektronikeinheit durch eine Abdeckung 228 geschützt.

Die Anordnung gemäß Fig. 9 kann man auch so ausführen, dass die Elektronikeinheit integraler Bestandteil einer die Abdeckung 228 umfassenden Lenkerend-Abdeckung ist.

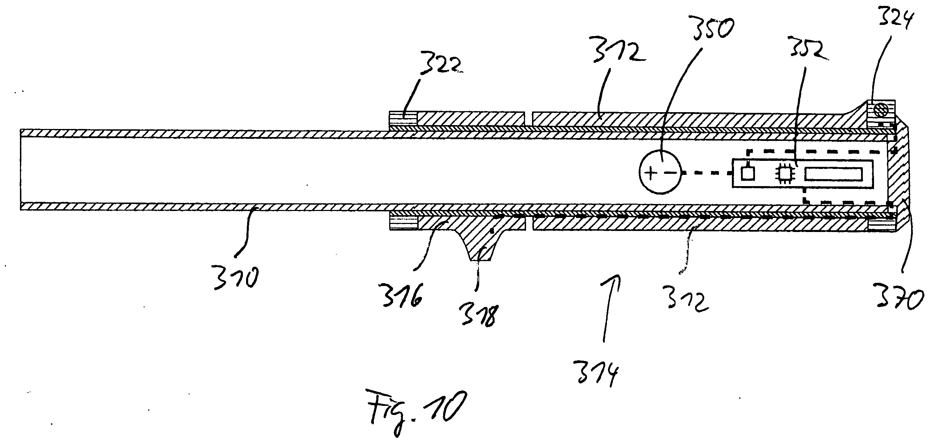

Die nicht beanspruchte Ausführungsvariante gemäß Fig. 10 unterscheidet sich von der Lösung gemäß Fig. 7 oder Fig. 8 dadurch, dass die im Lenkerinnenraum aufgenommene Elektronikeinheit auf der Leiterplatte 352 keine Antenne aufweist, sondern stattdessen über eine gestrichelt dargestellte Verbindungsleitung an einer extern im Bereich des Klemmrings 324 angeordneten Antenne angeschlossen ist. Der Klemmring ist hierzu aus einem funkwellendurchlässigen Material hergestellt. Die Antenne könnte auch an einer anderen Stelle vorgesehen sein, insbesondere integriert in die Griffeinheit 314.

Vorteilhaft kann die Elektronikeinheit integraler Bestandteil einer Lenkerend-Abdeckung sein, die einen die Deckelkappe 370 entsprechenden Abschnitt und die damit verbundene Elektronikeinheit umfassen könnte.

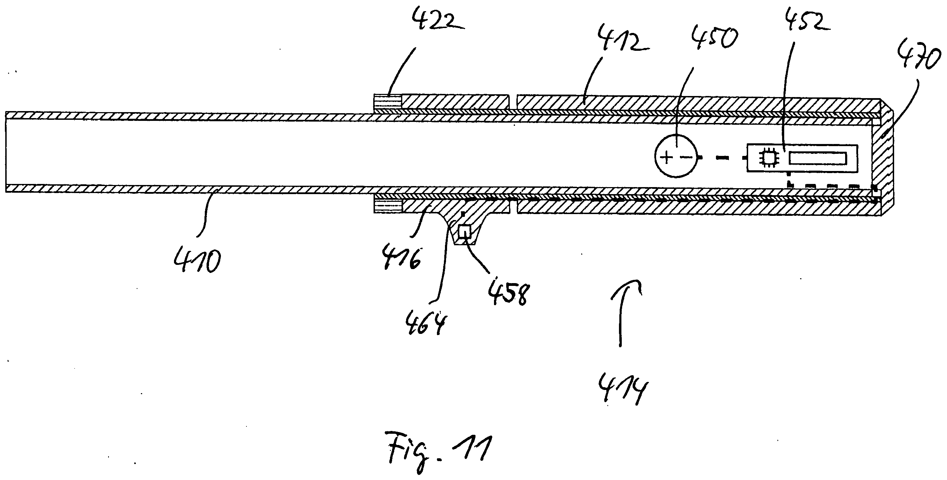

Fig. 11 zeigt ein weiteres in diese Richtung gehendes Beispiel. Bei dieser Ausführungsvariante ist die Antenne 458 in die elektrische Bedienanordnung 416 integriert. Die gestrichelt dargestellte Verbindungsleitungsanordnung verbindet also sowohl die Antenne als auch Signalgeberelemente der elektrischen Bedienanordnung mit der durch die Leiterplatte 452 und den Energiespeicher 450 repräsentierten Elektronikeinheit. Diese elektrische Verbindungsanordnung ist aus dem Lenkerrohrende herausgeführt und durch eine Führung des Griffelements 414 hin zur Bedienanordnung 416 geführt.

Die elektronische Einheit kann wiederum integraler Bestandteil einer Lenkerend-Abdeckung sein.

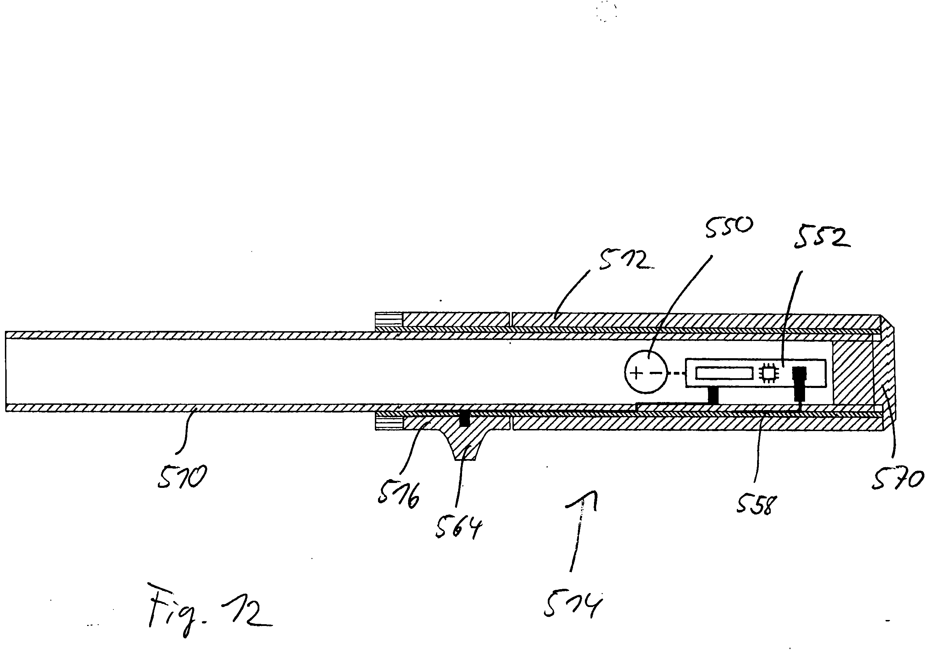

Gemäß Fig. 12 sind die Verbindungsleitungen von der durch die Leiterplatte 552 und dem Energiespeicher 550 schematisch repräsentierten Elektronikeinheit einerseits zur Bedienanordnung 516 und andererseits zu der an einem Außenumfang des Lenkers angeordneten Antenne 558 durch eine jeweilige Durchgangsöffnung des Lenkerrohrs 510 geführt. Der Lenker könnte mit entsprechend integral ausgeführten Verbindungselementen vorausgestattet sein. Auch bei dieser Variante ist es zweckmäßig, wenn die Elektronikeinheit integraler Bestandteil einer Lenkerend-Abdeckung ist.

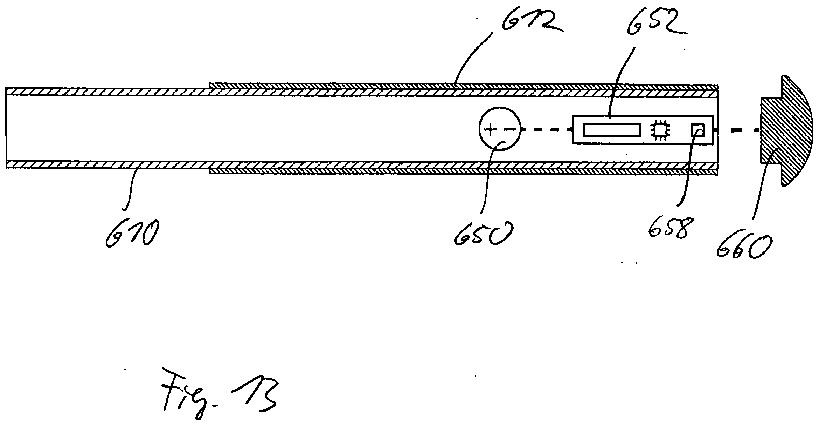

Fig. 13 zeigt schematisch eine nicht beanspruchte Ausführungsvariante, die in Richtung der Lösung gemäß Fig. 6 geht, allerdings mit vollständig im Lenkerinnenraum aufgenommener Elektronikeinheit und einer zugeordneten gesonderten Bedieneinheit 660 am Lenkerende, mit direkter Verbindung zu der Elektronikeinheit, etwa entsprechend Fig. 6, oder in Verbindung mit dieser über eine Verbindungsleitungsanordnung. Solch eine Lösung ist besonders zweckmäßig für einen Rennbügel oder einen Triathlonlenker. Man kann den Lenker mit einer radial offenen Aussparung entsprechend der Aussparung 172 der Fig. 8 ausführen, für eine bessere Funkwellenankopplung der Antenne 658. Die Bedieneinheit 660 sollte so weit als möglich aus einem funkwellendurchlässigen Material bestehen, also bspw. einem geeigneten Kunststoff.

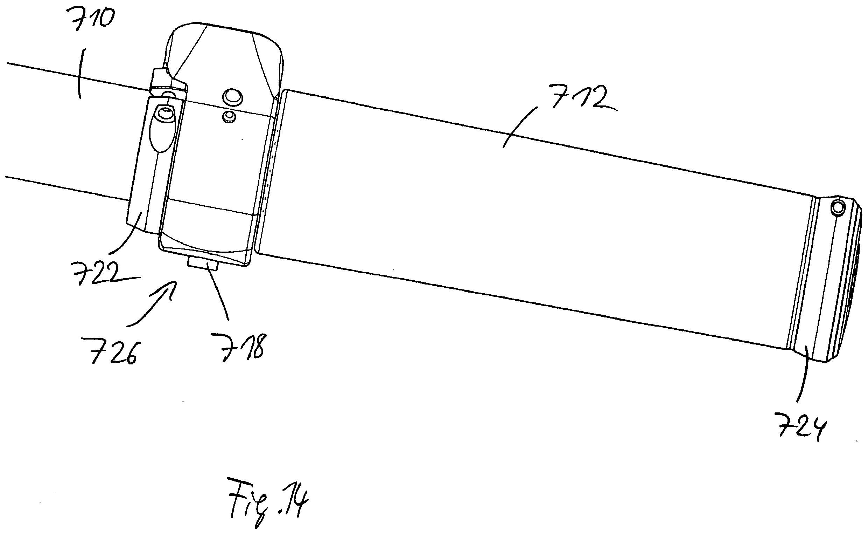

Die erfindungsgemässe Ansteuereinrichtung für ein Fahrrad ist in den Figuren 14 bis 17 in verschiedenen Ansichten dargestellt. Soweit zweckmäßig, werden weiter jeweils die gleichen Bezugszeichen wie in den vorangehenden Figuren für entsprechende oder analoge Komponenten verwendet, vermehrt um 100.

Zu erkennen ist ein Lenker 710, der gemäß Fig. 14 mit einem Griff 712 ausgestattet ist, vorliegend mit dem rechten Griff aus der Sicht des Fahrrad fahrenden Radfahrers. Gesondert von dem von einer geeigneten Griffeinheit oder einem geeignetem Griffelement gebildeten Griff 717 ist eine als integrale Einheit ausgeführte Ansteuereinheit 726 vorgesehen, die sowohl die Funktionen der Elektronikeinheiten der vorangehenden Ausführungsbeispiele als auch die Funktion einer elektrischen Bedienanordnung, vorliegend einer elektrischen Bedienhebelanordnung erfüllt.

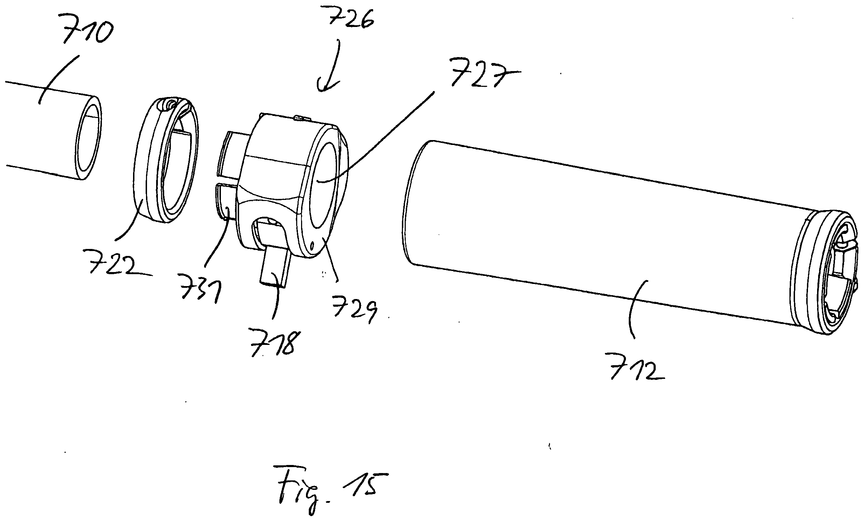

Wie besser in Fig. 15 zu erkennen, ist die Ansteuereinheit 726 ringförmig oder hülsenförmig ausgeführt, mit einer Aufsteck-Durchgangsöffnung 727, mit der die Ansteuereinheit 726 auf den Lenker aufgesteckt wird, so dass in einem ringförmig ausgeführtem Gehäuse 729 der Ansteuereinheit enthaltene Komponenten sich um den Außenumfang des Lenkers 710 herum erstrecken. Zum Festlegen der Ansteuereinheit 726 auf den Lenker 710 dient ein Klemmring 722, der Klemmzungen 731 der Ansteuereinheit auf dem Außenumfang des Lenkers festklemmt.

Bei dem vorliegenden Ausführungsbeispiel sind alle relevanten Komponenten der Ansteuereinrichtung in die Ansteuereinheit 726 integriert, einschließlich der wenigstens einen Antenne.

Ein Bedienhebel 718 ist in den Figuren unschwer erkennbar. Der Bedienhebel ist in Umfangsrichtung betätigbar. Der Bedienhebel könnte aber auch in anderer Richtung betätigbar sein. Alternativ kommt eine Druckknopfanordnung für eine Druckknopfbetätigung in Betracht.

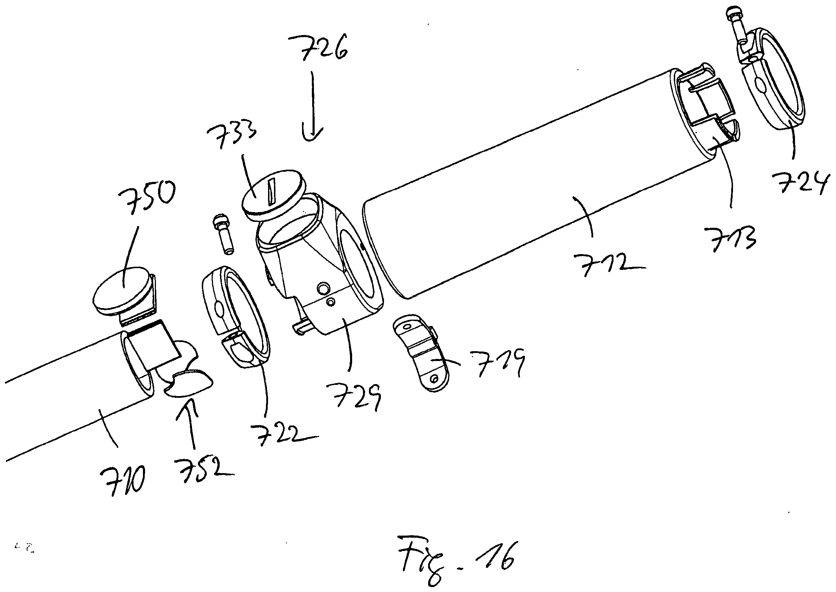

Fig. 16 zeigt eine Explosionsansicht der Anordnung gemäß Fig. 14. Zu erkennen ist auch ein weiterer Klemmring 724, der zur Befestigung des Griffs 712 durch Festklemmen von Klemmzungen 713 am Außenumfang des Lenkers 710 dient. Den Klemmringen 722 und 724 ist jeweils eine ebenfalls explosionsartig gesondert dargestellte Klemmschraube zugehörig.

Von der Ansteuereinheit 726 sind verschiedene Bestandteile explosionsartig gesondert dargestellt. Neben dem Gehäuse 729 und einem Batteriefachdeckel 733 ist auch ein den Bedienhebel 718 bereitstellendes Bedienhebelelement 719 sowie eine Batterie 750 und eine schematisch dargestellte Leiterplattenanordnung 752 zu erkennen. Letztere erstreckt sich in Umfangsrichtung um den Lenker über einen erheblichen Umfangswinkel und trägt alle benötigten elektronischen Komponenten einschließlich wenigstens einer Antenne.

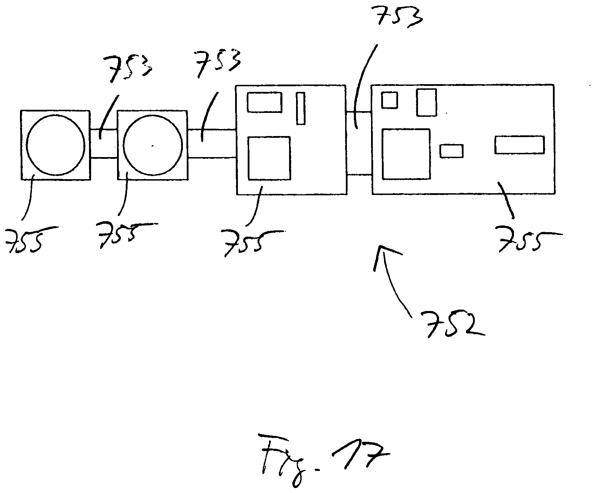

Fig. 17 zeigt eine konkretere illustrative Darstellung einer geeigneten Leiterplattenanordnung 752, umfassend mehrere über flexible Leiter 753 miteinander verbundene Leiterplatten 755. Alternativ könnte eine zumindest bereichsweise oder vollständig flexibel ausgeführte Leiterplatte oder könnten mehrere zumindest bereichsweise oder vollständig flexibel ausgeführte Leiterplatten verwendet werden, die sich im auf den Lenker montierten Zustand der Ansteuereinheit zumindest bereichsweise rings um den Außenumfang des Lenkers erstrecken.

Gemäß Fig. 16 ist ein Batteriefachdeckel 733 vorgesehen, der eine die Batterie 150 aufnehmende, in der Figur unterhalb des Deckels erkennbare Batterieaufnahme der Ansteuereinheit 726 verschließt. Alternativ könnte die Ansteuereinheit mit einem integrierten Akkumulator ausgeführt sein, mit Ladekontakten am Außenumfang der Ansteuereinheit, um den integrierten Akkumulator im Bedarfsfall aufladen zu können. Der Akkumulator könnte auch einfach mit einem zugehörigen Gehäuseabschnitt vom restlichen am Lenker verbleibenden Gehäuse der Ansteuereinheit abkoppelbar sein, für ein gesondertes Aufladen an einem anderen Ort und dann wieder ankoppeln an dem am Lenker verbliebenen Gehäuseabschnitt, unter Herstellung der notwendigen elektrischen Verbindungen.

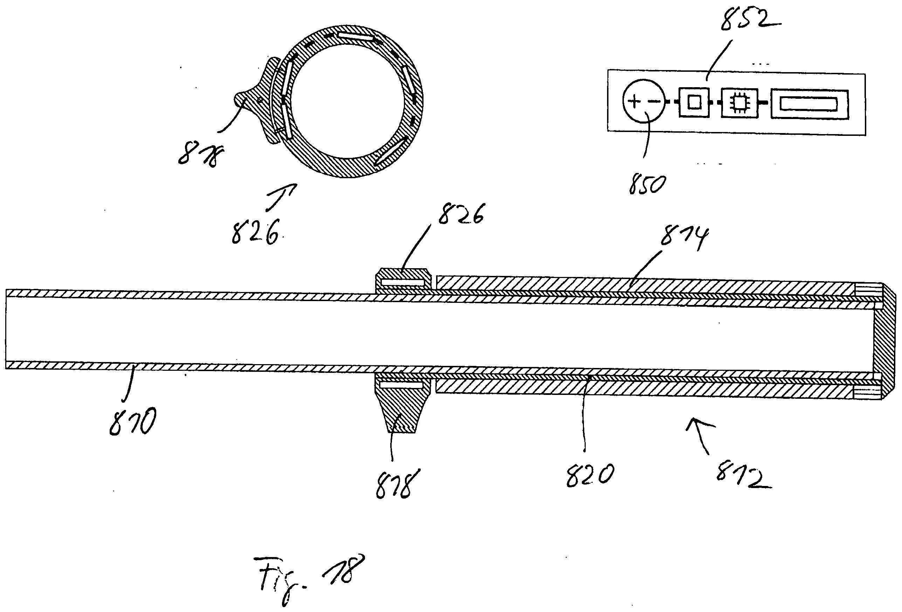

Die Figuren 18 bis 22 zeigen schematisch weitere Ausführungsbeispiele und Ausführungsvarianten. Es werden jeweils die gleichen Bezugszeichen wie in den Figuren 14 bis 17 verwendet, jeweils vermehrt um 100, und es werden jeweils nur die Unterschiede gegenüber dem vorangehend schon beschriebenen Ausführungsbeispiel bzw. den vorangehend schon beschriebenen Ausführungsbeispielen bzw. die Besonderheiten erläutert.

Auch gemäß Fig. 18 ist die Ansteuereinheit 826 ringförmig ausgeführt, mit einer sich im montierten Zustand über einen erheblichen Umfangswinkel um den Außenumfang des Lenkers erstreckenden elektronischen Anordnung umfassend eine zumindest bereichsweise flexible Leiterplattenanordnung 852, die die benötigten elektronischen Komponenten einschließlich wenigstens einer Antenne und Kontakte für eine Batterie 850 trägt. Gemäß Fig. 18 sitzt die ringförmige Ansteuereinheit 826 auf einem Hülsenelement 820 des Griff 812. Der Bedienhebel 818 befindet sich im gleichen Axialbereich wie die elektronische Schaltungsanordnung.

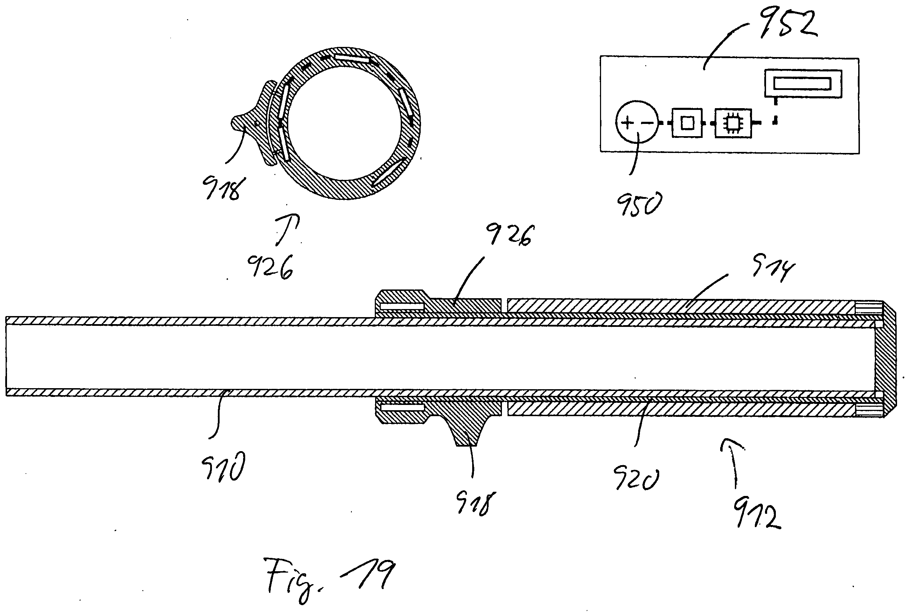

Fig. 19 entspricht der Anordnung gemäß Fig. 18. Die elektronische Schaltungsanordnung und die integrierte Bedienhebelanordnung mit dem Bedienhebel 918 (allgemein die integrierte Bedienanordnung) sind aber axial gegeneinander versetzt, um die ringförmige Ansteuereinheit 926 radial besonders kompakt auszuführen.

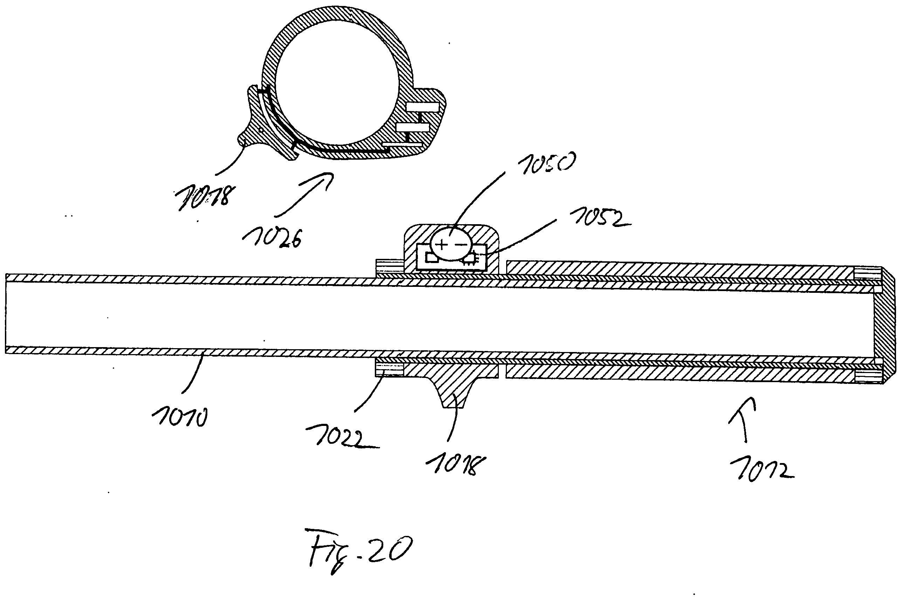

Fig. 20 zeigt eine Ausführungsvariante, bei der die elektronische Schaltungsanordnung nicht um den Außenumfang des die Ansteuereinheit 1026 tragenden Lenkers verteilt ist, sondern in einem vom Bedienelement, vorwiegend dem Bedienhebel 1018 in Umfangsrichtung beabstandeten Raumbereich konzentriert ist.

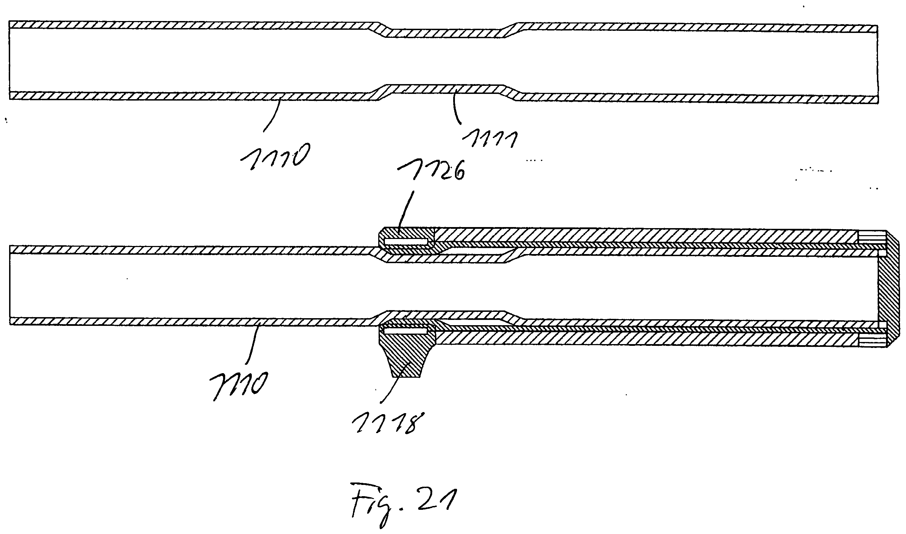

Auch nach Fig. 21 sind die Elektronik und die Antenne außerhalb des Lenkers in einer den Lenker ringförmig umgebenden Ansteuereinheit angeordnet, wie bei den anderen Ausführungsformen gemäß den Figuren 14 bis 20.

Die Ansteuereinheit 1126 entspricht weitgehend der Ansteuereinheit 826 weist aber kleinere Radialmaße auf, aufgrund einer Ausführung des Lenkerrohrs 1110 mit einem Abschnitt 1111 geringeren Durchmessers, an dem die Ansteuereinheit 1126 angeordnet ist. Es ist so eine kompakte und/oder ergonomische Ausgestaltung der Ansteuereinheit möglich. Zum Aufstecken bzw. Anordnen der Ansteuereinheit auf den Lenker könnte die Ansteuereinheit zwei sich um die Aufstecköffnung erstreckende, im Sinne der Vergrößerung der Öffnung auslenkbare und im aufgesteckten Zustand aneinander fixierbare Gehäuseabschnitte oder zwei gesonderte Gehäuse-Halbschalen aufweisen.

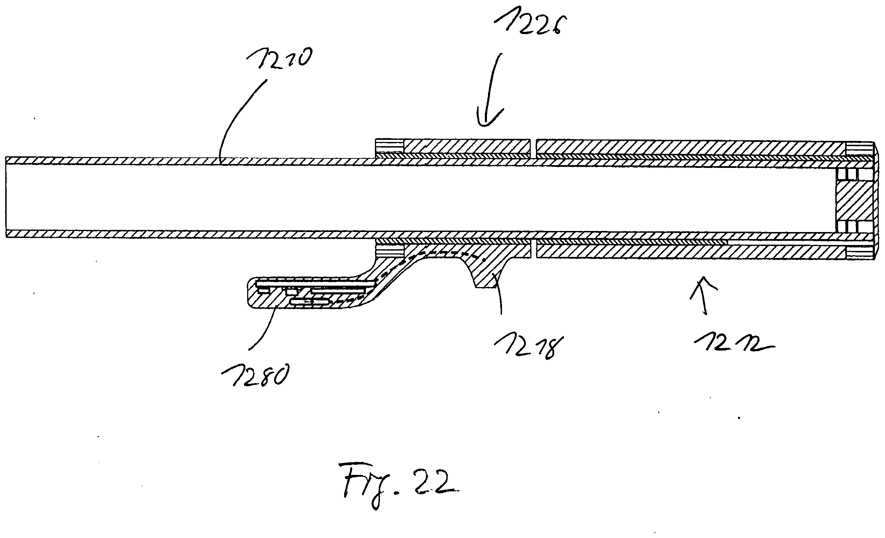

Gemäß Fig. 22 ist eine ebenfalls auf den Lenker 1110 aufgesteckte ringförmige Ansteuereinheit 1226 vorgesehen, die mit dem wenigstens einem Bedienelement, vorliegend dem wenigstens einem Bedienhebel 1218, und einem sich axial und radial von dem Ringabschnitt der Ansteuereinheit weg erstreckenden Gehäusefortsatz 1280 ausgeführt ist, in dem die elektronische Schaltungsanordnung mit der Antenne und der elektrischen Energieversorgung, vorliegend einer Batterie oder Batterieanordnung, angeordnet ist und über eine gestrichelt dargestellte Leitungsverbindung mit der in den Ringabschnitt integrierten elektrischen Bedienanordnung, vorliegend Bedienhebelanordnung 1218 verbunden ist.

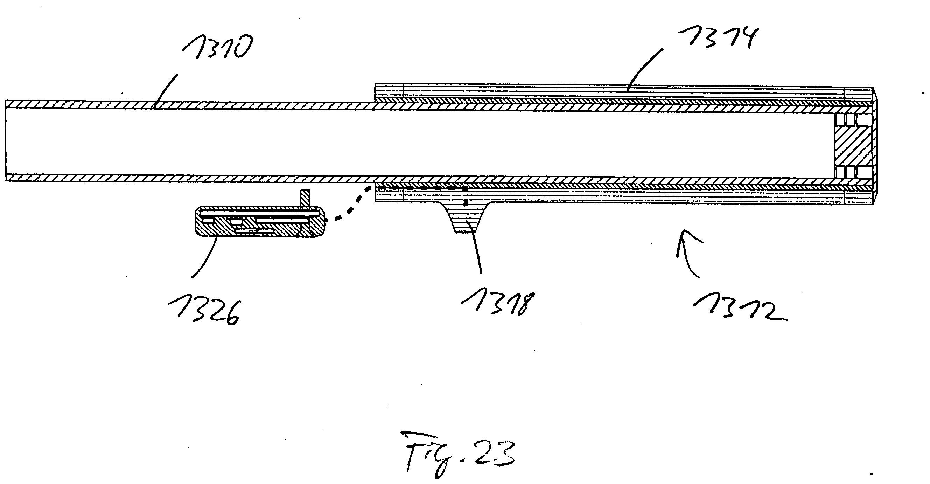

Fig. 23 veranschaulicht eine alternative Ausgestaltung, bei der statt eines Gehäusefortsatzes zu einem Ringabschnitt der Ansteuereinheit eine gesondert zu der Bedienanordnung, ggf. Bedienhebelanordnung 1316 angeordnete und am Lenker befestigbare Ansteuereinheit 1326 vorgesehen ist, die alle Komponenten und Bestandteile der elektronischen Ansteueranordnung enthält, einschließlich Batterie und Antenne, bis auf die über eine gestrichelt dargestellte Leitungsverbindung angeschlossene Bedienanordnung 1316, die als gegenüber dem Griff gesonderte, auf den Lenker aufgesteckte Ringeinheit ausgeführt sein kann (gewünschtenfalls ähnlich zu Fig. 22) oder in den Griff 1312 bzw. dessen Griffeinheit 1314 integriert sein kann, wie dies in Fig. 23 veranschaulicht ist.

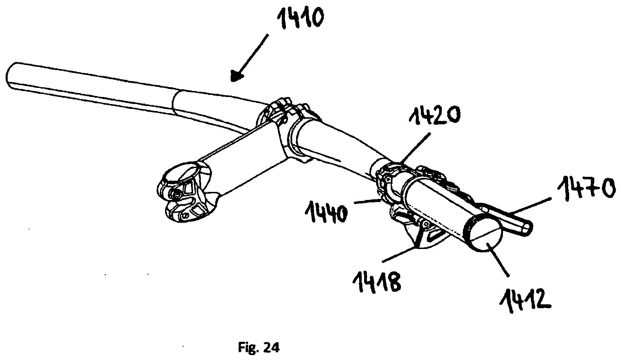

Die Figuren 24, 25 und 26 zeigen zwei weitere Beispiele der erfindungsgemäßen Ansteuereinrichtungen. Beide Ansteuereinrichtungen erfüllen dabei ebenfalls die Funktionen der Elektronikeinheiten als auch das Funktionsprinzip der elektrischen Bedienanordnung der vorangehenden Ausführungsbeispiele.

Die gezeigten Ansteuerungseinrichtungen umfassen ein manuell bedienbares Bedienelement 1418, 1518 und eine in einem Gehäuse 1430, 1530 angeordnete und hier nicht sichtbare elektronische Schaltungsanordnung. Die elektronische Schaltungsanordnung wurde bereits detailliert im Zusammenhang mit den vorhergehenden Beispielen beschrieben. Das Bedienelement 1418, 1518 ist drehbar am Gehäuse 1430, 1530 gelagert. Das die elektronische Schaltungsanordnung aufnehmende Gehäuse 1430, 1530 ist außen am Lenker angeordnet.

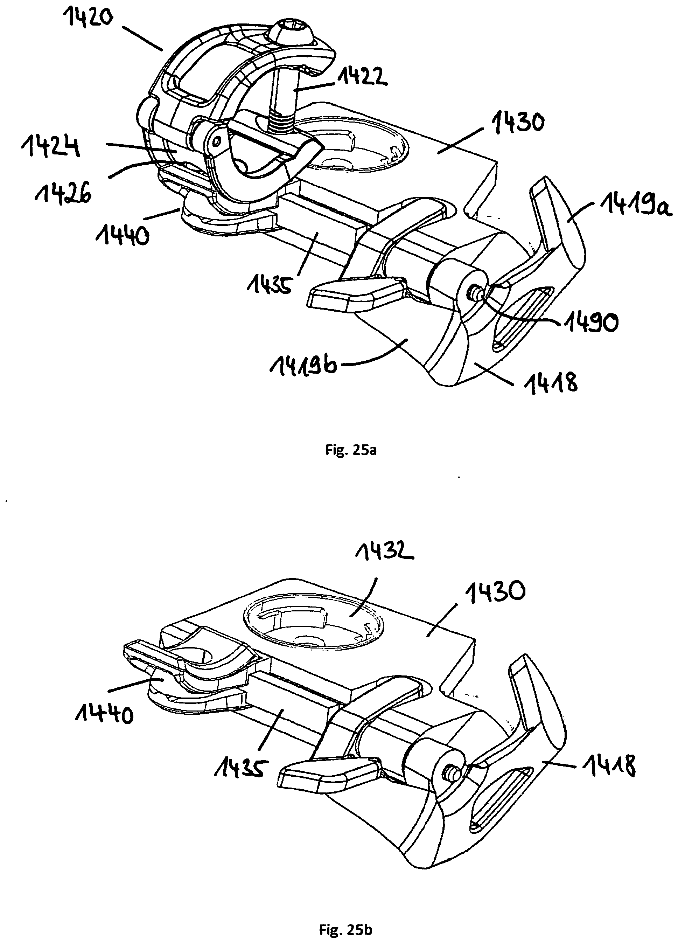

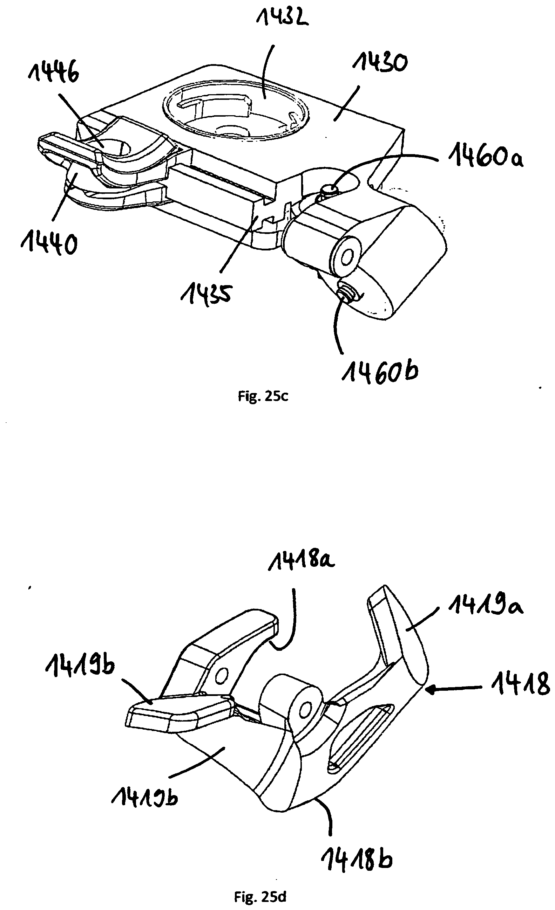

Die in den Figuren 24, 25 und 26 gezeigten Ausführungsformen der Ansteuereinrichtung unterscheiden sich hauptsächlich durch ihre Befestigung am Lenker, worauf am Ende eingegangen wird. Das Funktionsprinzip der Ansteuereinrichtung ist bei beiden Ausführungsformen gleich und wird daher lediglich anhand einer Ausführungsform bezugnehmend auf die Figuren 24 und 25 beschrieben.

Figur 24 zeigt die Ansteuereinrichtung in einem am Fahrradlenker 1410 montierten Zustand. Die Ansteuereinrichtung befindet sich in Fahrtrichtung gesehen auf der rechten Seite des Fahrradlenkers 1410 in der Nähe des Griffs 1412. Mit dem manuell bedienbaren Bedienelement 1418 der Bedienanordnung wird ein hier nicht gezeigtes elektromechanisches hinteres Schaltwerk drahtlos gesteuert. Je nach Bewegungsrichtung des Bedienelements 1418 wird in einen höheren oder niedrigeren Gang geschalten. In der gezeigten Ausführungsform ist nur eine Bedienanordnung zu Steuerung des hinteren Schaltwerks nötig. Moderne Fahrradantriebe verfügen häufig über ein einzelnes vorderes Kettenblatt und eine hintere Mehrfach-Ritzelanordnung mit einer großen Anzahl von Ritzeln. Ein Einzelkettenblatt in Kombination mit einer Mehrfach-Ritzelanordnung mit zehn, elf oder zwölf Ritzeln deckt ein breites Übersetzungsspektrum ab und hat sich bewährt. Auch eine noch weiter erhöhte Anzahl von dreizehn oder vierzehn Ritzeln wäre denkbar. Aufgrund des Einzelkettenblatts ist kein vorderer Umwerfer nötig und damit auch keine weitere Bedienanordnung.

Selbstredend könnte bei Bedarf eine solche weitere Bedienanordnung zur Steuerung eines vorderen elektromechanischen Umwerfers oder einer anderen Fahrradkomponente nach dem gleichen Prinzip auf der noch freien linken Lenkerseite angeordnet werden.

Das Funktionsprinzip der Ansteuereinrichtung wird nun bezugnehmend auf die Figuren 24und 25a-c genauer erläutert. Das Bedienelement 1418 wird mit dem Daumen und/oder einem anderen Finger bewegt. Die Bewegung ist in diesem Fall eine Rotationsbewegung des Bedienelements 1418 um eine Rotationsachse 1490. Das Bedienelement 1418 rotiert um die Rotationsachse 1490 gegenüber dem feststehenden Gehäuse 1430. Das Bedienelement 1418 wird aus seiner Neutralstellung in eine erste Bewegungsrichtung im Uhrzeigersinn um die Rotationsachse 1490 gedreht, indem vom Fahrer Druck auf die erste Angriffsfläche 1419a des Bedienelements 1418 ausgeübt wird. Umgekehrt wird das Bedienelement 1418 in eine zweite Bewegungsrichtung entgegen dem Uhrzeigersinn um die Rotationsachse 1490 gedreht, indem der Fahrer Druck auf die zweite Angriffsfläche 1419b ausübt. Das Bedienelement 1418 ist so geformt, dass dem Fahrer mehrere Möglichkeiten zur Verfügung stehen dieses zu bewegen. Die Angriffsflächen 1419 sind auf Vorsprüngen und/oder Einkerbungen ausgebildet. Die Vorsprünge können sowohl auf ihrer Vorder- als auch Rückseite angegriffen werden und entsprechend in eine erste oder zweite Bewegungsrichtung gedrückt werden.

Das Gehäuse 1430 besteht aus zwei Gehäusehälften und nimmt sowohl die elektronische Schaltungsanordnung, samt Antenne als auch die Batterie auf. Selbstverständlich kann das Gehäuse auch aus mehr als zwei Teilen bestehen. Das Batteriefach 1432 für eine auswechselbare Batterie wird mit einem Batteriefachdeckel verschlossen (Batterie und Batteriefachdeckel sind hier nicht gezeigt). Die Batterie versorgt die elektronische Schaltungsanordnung mit Energie. Das Gehäuse 1430 umfasst weiterhin Aufnahmen für die beiden elektrischen Kontaktschalter 1460. Die elektrischen Kontaktschalter 1460 sind so in dem Gehäuse 1430 aufgenommen, dass sie zum einen durch Schalterkontaktflächen 1418a,b des Bedienelements 1418 aktiviert werden können, und zum anderen mit der elektronischen Schaltungsanordnung im inneren des Gehäuses 1430 verbunden sind. Jeweils ein Ende der elektrischen Kontaktschalter 1460 weist dazu in Richtung Bedienhebel 1418 und jeweils das andere Ende der elektrischen Kontaktschalter 1460 in Richtung der elektronischen Schaltungsanordnung.

Es wäre denkbar das Bedienelement 1418 austauschbar zu gestalten, so dass es ergonomisch auf die Bedürfnisse des Fahrers abgestimmt werden kann. Der Fahrer könnte dann aus einer Vielzahl von hinsichtlich Form, Größe, Material und/oder Oberflächenbeschaffenheit unterschiedlich gestalteten Bedienelementen auswählen. Eine lösbare Kopplung des Bedienelements mit dem Gehäuse mittels der Rotationsachse wäre einfach zu realisieren.

Durch Bewegen des Bedienelements 1418 aus seiner Neutralstellung heraus wird ein erster oder zweiter elektrischer Kontaktschalter 1460 a, b aktiviert und in Folge ein Steuerbefehl von der Ansteuereinrichtung an die zu steuernden Komponente, dem hinteren Schaltwerk, gesendet. Die elektrischen Kontaktschalter 1460 sind leitend mit der elektronischen Schaltungsanordnung im Gehäuseinneren verbunden. In der ersten Bewegungsrichtung des Bedienelements 1418 (im Uhrzeigersinn) wird ein erster elektrischer Kontaktschalter 1460a aktiviert, indem eine erste Schalterbetätigungsfläche 1418a auf der Rückseite des Bedienelements 1418 auf den ersten elektrischen Kontaktschalter 1460a drückt. In Reaktion darauf wird ein erstes Signal generiert und an das zu steuernde Schaltwerk zum Schalten in die nächstkleinere Gangstufe gesendet. In eine zweite Bewegungsrichtungsrichtung des Bedienelements 1418 (entgegen dem Uhrzeigersinn) wird ein zweiter elektrischer Kontaktschalter 1460b aktiviert, indem eine zweite Schalterbetätigungsfläche 1418b auf der Rückseite des Bedienelements 1418 auf den zweiten elektrischen Kontaktschalter 1460b drückt. In Reaktion darauf wird ein zweites Signal generiert und an das zu steuernde Schaltwerk zum Schalten in die nächsthöhere Gangstufe gesendet. Wenn das Bedienelement 1418 länger in der Aktivstellung gehalten wird, werden mehrere Gangstufen nacheinander geschalten.

Die Anordnung des Bedienelements 1418 und sein Zusammenwirken mit den elektrischen Kontaktschaltern 1460 lässt sich am besten in den Figuren 25a bis 25c erkennen. Für ein besseres Verständnis zeigt Fig. 25c die Ansteuereinrichtung ohne das Betätigungselement 1418, so dass die elektrischen Kontaktschalter 1460 sichtbar werden.

Die beiden elektrischen Kontaktschalter 1460 sind federbeaufschlagt und drücken das Bedienelement 1418 in seine Neutralstellung zurück. Bei Betätigung erzeugt der elektrische Kontaktschalter selbst eine haptische Rückmeldung und überträgt diese auf das Betätigungselement. Die elektrischen Kontaktschalter 1460 sind als Schnappschalter ausgebildet. Ein Schnappschalter, auch Sprungschalter genannt, ist vorteilhaft weil er sowohl einen Kontaktschluss als auch die haptische Rückmeldung erzeugt. Weitere Bauteile oder konstruktive Maßnahmen sind nicht nötig. Außerdem können die Kraft-Weg Eigenschaften des Schnappschalters angepasst werden, um zum einen die Betätigung durch den Fahrer mittels Daumen oder Zeigefinger zu ermöglichen, und zum anderen genügend haptische Rückmeldung zu erzeugen. In der gezeigten Ausführungsform kommen zwei sich in ihren Eigenschaften unterscheidende elektrische Kontaktschalter zum Einsatz. Der erste elektrische Kontaktschalter 1460a ist mit einem schwächeren Federelement ausgestattet als der zweite elektrische Kontaktschalter 1460b. Die bewirkt, dass der Fahrer in die eine Bewegungsrichtung des Bedienelements 1418 weniger Kraft zum Schalten aufbringen muss als in die andere Bewegungsrichtung. Typischerweise wird die erste Angriffsfläche 1419a mit dem Zeigefinger bedient und die zweite Angriffsfläche 1419b mit dem Daumen. Mit dem Daumen kann leichter Druck aufgebracht werden als mit dem Zeigfinger. Um ein ähnliches Schaltempfingen zu erzeugen, wirkt die zweite Angriffsfläche 1419b (Daumen) mit dem zweiten Schnappschalter 1460b zusammen, der ein stärkeres Federelement aufweist als der erste Schnappschalter 1460a. Dies lässt sich auch an der unterschiedlichen Größe der beiden elektrischen Kontaktschalter 1460 erkennen. Der Schnappschalter ist kompakt genug, um aus ergonomischer Sicht bequem betätigt zu werden und wenig Bauraum in der Vorrichtung zum Schalten einzunehmen.

Alternativ kann eine Schnappscheibe (snap dome) als elektrischer Kontaktschalter Verwendung finden.

Die elektronische Schaltungsanordnung ist zusammen mit der Antenne im Gehäuse 1430 aufgenommen, welches auf dem Außenumfang des Lenkers 1410 gehalten ist. Das Gehäuse 1430 wird mittels einer den Lenker 1410 ringförmig umgebenden Befestigungsvorrichtung fixiert. Die Befestigungsvorrichtung ist als separate Schelle 1420 ausgebildet. Alternativ könnte die Befestigungsvorrichtung aber auch als ein integraler Gehäuseabschnitt ausgebildet sein (vgl. Figur 14 ff.).

Figur 24 zeigt die Ansteuereinrichtung fertig am Lenker 1410 montiert. Dabei ist die Ansteuereinrichtung mittels einer Schelle 1420 oder eines Klemmrings am Lenker 1410 befestigt, die den Lenker 1410 umgreifen und an diesem drehfest montiert werden können. Die Schelle erlaubt sowohl eine translatorische Positionierung entlang der Lenkerachse, als auch eine rotatorische Ausrichtung in Bezug auf den Bremshebel. Ansteuereinrichtung und Bremshebel sind so zueinander positioniert, dass sowohl ein kollisionsfreie, als auch eine ergonomische Handhabung möglich ist.

Ähnlich wie in den Ausführungsbeispielen in Fig. 14 bis 23 sind in dieser Ausführungsform alle Bauteile außerhalb des Lenkers 1410 angeordnet. Die Ansteuereinrichtung bildet eine Einheit, die außerhalb des Lenkers 1410 angeordnet und damit leicht zugänglich und zu montieren ist. Eine Anordnung außerhalb des Lenkers hat den Vorteil, dass zu sendende Signale leichter übertragbar sind. Die Anordnung der elektronischen Steueranordnung im Gehäuse 1430 bietet dennoch genügend Schutz vor Verschmutzung und Nässe.

Die elektronische Schaltungsanordnung umfasst eine Leiterplattenanordnung. Die Antenne ist als Baustein auf der Leiterplattenanordnung angeordnet. Für eine bestmögliche Übertragung ist die Antenne samt Gehäuse 1430 so ausgerichtet, dass das Signal weitestgehend ohne Hindernisse an die zu steuernde Fahrradkomponente übertragen werden kann. Um die Übertragung der Funk-Signale nicht zu stören, ist das Gehäuse 1430 ist aus einem nicht-metallischen Material geformt. In dem gezeigten Ausführungsbeispiel handelt es sich um ein am Hinterrad angeordnetes elektromechanisches Schaltwerk, so dass das Gehäuse entsprechend nach hinten und unten in Fahrtrichtung des Fahrrads gesehen ausgerichtet ist. Die Antenne kann insbesondere windschief zur Lenkerlängsachse ausgerichtet sein.

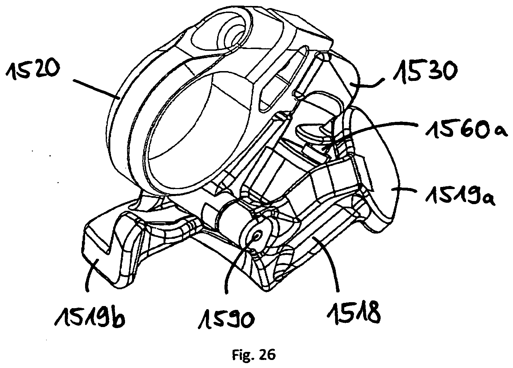

Die bezüglich Figur 24 und 25 gemachten vorhergehenden Ausführungen sind gleichermaßen auf das in Figur 26 gezeigte Ausführungsbeispiel anwendbar. Die beiden Ausführungsformen unterscheiden sich hauptsächlich durch die Art ihrer Befestigung am Lenker.

In dem in den Figuren 24 und 25 gezeigten Ausführungsbeispiel ist die Schelle 1420, die die Ansteuereinrichtung am Lenker 1410 hält gleichzeitig für die Befestigung des Bremshebels 1470 zuständig. Figur 24 zeigt die Ansteuereinrichtung zusammen mit dem Bremshebel 1470 neben dem Griff 1412 am Lenker 1410 montiert.

Die Schelle 1420 ist mittels einer Klemmschraube 1422 am Lenker 1410 fixiert. Die Ansteuereinrichtung und der Bremshebel 1470 können mittels der Schelle 1420 in Umfangs- und/oder Längsrichtung des Lenkers 1410 positioniert und festgelegt werden. Zwischen der Schelle 1420 und dem Gehäuse 1430 der Ansteuereinrichtung ist ein Adapter 1440 angeordnet. Die Ansteuereinrichtung lässt sich mittels des Adapters 1440 entlang einer Führung 1424 an der Schelle 1420 in Umfangsrichtung des Lenkers 1410 verschieben und ausrichten. Der Adapter 1440 wird dann in der gewünschten Position an der Schelle 1420 festgelegt - z. B. mit einer Schraube, die durch eine Öffnung 1446 im Adapter 1440 geführt und in einem Langloch 1426 in der Führung 1424 der Schelle 1420 befestigt wird. Eine Einstellbarkeit der Ansteuereinrichtung in Umfangsrichtung in einem Winkelbereich von etwa 20 Grad um die Lenkerlängsachse ist ausreichend.

Die Ansteuereinrichtung kann also zusätzlich und unabhängig von der Positionierung des Bremshebels 1470 entlang der Führung 1424 der Schelle 1420 in Umfangsrichtung des Lenkers 1410 positioniert werden. Neben der Verstellbarkeit in Umfangsrichtung des Lenkers 1410 erlaubt diese Adapterlösung auch eine Linearverstellung im Wesentlichen entlang der Lenkerlängsachse. Ein linearer Verstellweg von etwas 10mm bis 20mm erlaubt eine Anpassung an die Ergonomie der meisten Fahrer. Dafür weist das Gehäuse 1430 einen Vorsprung 1435 zur Linearverstellung auf. Der Adapter 1440 weist zwei Arme auf, die den Vorsprung 1435 umgreifen. Die Arme des Adapters 1440 können am Vorsprung 1435 klemmend festgelegt werden. Idealerweise mit der gleichen Schraube, die zur Festlegung in Umfangsrichtung durch die Öffnung 1446 im Adapter 1440 geführt wird. Diese Ausführung erlaubt das Gehäuse 1430 gegenüber dem Adapter 1440 und somit gegenüber der Schelle 1420 stufenlos linear zu verschieben.

Alternativ könnte auch eine stufenweise Linearverstellung durch eine bestimmte Anzahl von Bohrungen oder einer Rasterung im Vorsprung des Gehäuses realisiert werden.

In der Ausführungsform nach Figur 24 und 25 ist somit eine Positionierung der Ansteuereinrichtung in Umfangs- und/oder Längsrichtung des Lenkers 1410 möglich. Mit der Schelle 1420 ist gleichzeitig der Bremshebel 1470 am Lenker 1410 befestigt. Die Einstellung der Ansteuereinrichtung und des Bremshebels 1470 sind aufgrund des Adapters 1440 unabhängig voneinander möglich.

Alternativ wäre die Adapterlösung mit Linear- und Umfangspositionierung der Ansteuereinrichtung gegenüber der Schelle, auch ohne eine gleichzeitige Bremshebelbefestigung an der Schelle denkbar.

Auch eine bloße Linearverschiebung der Ansteuereinrichtung gegenüber der Schelle wäre möglich.

Alternativ können zwei getrennte Befestigungen vorgesehen sein. Beispielsweise eine Schelle zur Befestigung des Bremshebels und eine weitere Schelle zur Befestigung der Ansteuereinrichtung.

Figur 26 zeigt eine weitere Ausführungsform der Ansteuereinrichtung, die mittels einer Schelle 1520 am Lenker montierbar ist. Diese Schelle 1520 ist fest mit dem Gehäuse 1530 verbunden und lässt keine Verstellung der Ansteuereinrichtung gegenüber der Schelle 1520 in Linear- und/oder Umfangsrichtung des Lenkers zu. Allerdings lässt die Schelle 1520 grundsätzlich eine Positionierung der Ansteuereinrichtung in Umfangsrichtung und entlang der Lenkerachse zu, indem die Schelle 1520 selbst entlang des Lenkers verschoben bzw. um diesen gedreht wird. Die gezeigte Schelle 1520 ist auch nicht für die Befestigung eines Bremshebels ausgelegt. Der Bremshebel müsste separat von der Schelle 1520 am Lenker montiert und positioniert werden.

Alternativ könnte die Schelle eine Kröpfung in einem Bereich aufweisen, in dem das Gehäuse der Ansteuereinrichtung an der Schelle befestigt wird. Die Kröpfung der Schelle erstreckt sich entweder in Richtung Lenkermitte oder in Richtung Griff. Mit Hilfe einer solchen Kröpfung wird die Ansteuereinrichtung versetzt zur Schelle angebracht. Zum Beispiel bringt eine Kröpfung der Schelle in Richtung Griff die Ansteuereinrichtung näher an den Griff heran und macht sie damit für den Fahrer besser erreichbar, ohne die Schelle in Richtung Griff verschieben zu müssen. Es kann also ein gewisser Abstand überbrückt werden, ohne die Schelle linear verschieben zu müssen. Dies ist besonders dann von Bedeutung, wenn wenig Platz besteht bzw. es zur Kollision der Schelle mit anderen Bauteilen am Lenker kommt.

Alternativ wäre eine Linearverschiebung der Ansteuereinrichtung gegenüber der Schelle denkbar, wobei das Gehäuse einen Vorsprung aufweist, der in eine Führung an der Schelle eingreift und gegenüber dieser verschoben werden kann. Dies würde eine schnelle Einstellung an die Ergonomie des Fahrers ermöglichen, ohne die Schelle lösen zu müssen. Alternativ könnten die Schelle und das Gehäuse bzw. zumindest ein Teil des Gehäuses einstückig ausgebildet sein. Damit wären nur sehr wenige Bauteile nötig und der Montageaufwand gering.

Das Funktionsprinzip der Ansteuereinrichtung entspricht ansonsten dem der in Figur 25 und 26 gezeigten Variante. Das Gehäuse 1530 beinhaltet die Elektronik, die Batterie und nimmt auch die elektrischen Kontaktschalter 1560 auf. Das Betätigungselement 1518 ist drehbar um die Rotationsachse 1590 am Gehäuse 1530 gelagert. Durch Drücken einer der beiden Angriffsflächen 1519a, 1519b des Betätigungselements 1518, wirkt das Betätigungselement 1518 mit einem der beiden elektrischen Kontaktschalter 1560 zusammen und schickt einen Steuerbefehl an die zu steuernde Komponente.

## Patentansprüche

1. Ansteuereinrichtung für ein Fahrrad, welche am Lenker (710; 810; 910; 1010; 1110; 1210; 1310; 1410) des Fahrrads angeordnet oder anordenbar ist und zur drahtlosen Ansteuerung wenigstens einer elektronischen, elektrischen, elektromechanischen oder elektrohydraulischen Komponente des Fahrrads dient, umfassend:
eine wenigstens ein manuell bedienbares Bedienelement (718; 818; 918; 1018; 1118; 1218; 1318; 1418; 1518) aufweisende Bedienanordnung, welche dafür ausgeführt ist, auf eine Bedienung des Bedienelements anzusprechen und die Bedienung repräsentierende elektrische Signale abzugeben;
wenigstens eine elektronische Schaltungsanordnung umfassend eine Funk-Kommunikationsschaltung, eine an der Bedienanordnung angeschlossene oder anschließbare Steuerschaltung und wenigstens eine an der Funk-Kommunikationsschaltung angeschlossene oder anschließbare oder in diese integrierte Antenne,
wobei die Steuerschaltung dafür ausgeführt ist, auf Basis von der Bedienanordnung empfangenen elektrischen Signalen vermittels der Funk-Kommunikationsschaltung und der Antenne drahtlose Steuerbefehle an die
wenigstens eine elektronische, elektrische, elektromechanische oder elektrohydraulische Komponente des Fahrrads zu geben,
**gekennzeichnet durch** ein bezogen auf die Mittelachse des Lenkers radial außen am Lenker (710; 810; 910; 1010; 1110; 1210; 1310; 1410) gehaltenes Gehäuse (729; 1280; 1430; 1530), welches die elektronische Schaltungsanordnung und die Antenne enthält.

2. Ansteuereinrichtung nach Anspruch 1,
**gekennzeichnet durch** eine Einheit, die die Bedienanordnung, die Steuerschaltung, die Funk-Kommunikationsschaltung und die Antenne aufweist und eine am Lenker (710; 810; 910; 1110; 1210; 1310; 1410) angeordnete oder anordenbare Komponente bildet.

3. Ansteuereinrichtung nach einem der vorhergehenden Ansprüche,
**dadurch gekennzeichnet, dass** die elektronische Schaltungsanordnung sich zumindest
bereichsweise rings um einen Außenumfang des Lenkers erstreckend angeordnet oder anordenbar ist.

4. Ansteuereinrichtung nach Anspruch 3,
**dadurch gekennzeichnet, dass** die oder wenigstens eine Antenne gegenüber einem Griff (712; 812, 912; 1012; 1212; 1312) des Lenkers (710; 810; 910; 1110; 1210; 1310) in Richtung zu einer Lenkermitte versetzt auf einer Außenseite des Lenkers angeordnet oder anordenbar ist.

5. Ansteuereinrichtung nach Anspruch 3 oder 4,
**dadurch gekennzeichnet, dass** eine zumindest bereichsweise flexibel ausgeführte Leiterplatte (752; 852; 952; 1052) bzw. die über flexible Leiter (753) verbundenen Leiterplatten (755) sich zumindest bereichsweise rings um den Außenumfang des Lenkers (710; 810; 910; 1110; 1210; 1310) erstreckt bzw. sich so erstreckend anordenbar ist/sind.

6. Ansteuereinrichtung nach einem der Ansprüche 3 bis 5,
**dadurch gekennzeichnet, dass** die Antenne von einer/der Leiterplattenanordnung der elektronischen Schaltungsanordnung getragen ist, wobei die Leiterplattenanordnung sich zumindest bereichsweise rings um einen Außenumfang des Lenkers erstreckend angeordnet oder anordenbar ist.

7. Ansteuereinrichtung nach einem der Ansprüche 4 bis 6 **dadurch gekennzeichnet, dass** das Gehäuse auf den Außenumfang des Lenkers aufgesteckt oder aufsteckbar ist.

8. Ansteuereinrichtung nach einem der Ansprüche 3 bis 6,
**dadurch gekennzeichnet, dass** das Gehäuse (729) einen sich um den Lenker (710; 810; 910; 1110; 1210; 1310) erstreckenden ringförmigen oder hülsenförmigen Gehäuseabschnitt aufweist.

9. Ansteuereinrichtung nach Anspruch 8,
**dadurch gekennzeichnet, dass** das Gehäuse (30; 729) eine Aufnahme für wenigstens eine auswechselbare Batterie (750; 850; 950; 1050) aufweist, mit der die elektronische Schaltungsanordnung mit elektrischer Energie versorgbar ist.

10. Ansteuereinrichtung nach Anspruch 9,
**dadurch gekennzeichnet, dass** die Aufnahme durch Öffnen eines Gehäuseverschlusses (733) oder voneinander Trennen mehrerer gesonderter Gehäuseabschnitte zugänglich ist.

11. Ansteuereinrichtung nach Anspruch 1,
**gekennzeichnet durch** eine das Gehäuse (729; 1280; 1430; 1530) am Lenker (710; 1010; 1210; 1310; 1410) fixierende, vorzugsweise den Lenker (710; 1010; 1210; 1310; 1410) ringförmig umgebende Befestigungsvorrichtung (722; 1022; 1420; 1422; 1520).

12. Ansteuereinrichtung nach Anspruch 11,
**dadurch gekennzeichnet, dass** das Gehäuse (1280) seitlich von der Befestigungsvorrichtung in Richtung zur Lenkermitte vorsteht.

13. Ansteuereinrichtung nach Anspruch 11 oder 12,
**dadurch gekennzeichnet, dass** die Befestigungsvorrichtung (722; 1022; 1420; 1422; 1520) die Bedienanordnung aufweist.

14. Fahrrad, welches mit wenigstens einer Ansteuereinrichtung nach einem der vorhergehenden Ansprüche und mit wenigstens einer vermittels dieser ansteuerbarer
elektronischen, elektrischen, elektromechanischen oder elektrohydraulischen Komponente ausgestattet ist.

## Claims

1. Drive device for a bicycle, which drive device is arranged or can be arranged on the handlebar (710; 810; 910; 1010; 1110; 1210; 1310; 1410) of the bicycle and serves to wirelessly drive at least one electronic, electrical, electromechanical or electrohydraulic component of the bicycle, comprising:
an operator control arrangement which has at least one manually operable operator control element (718; 818; 918; 1018; 1118; 1218; 1318; 1418; 1518) and is designed to respond to operation of the operator control element and to output electrical signals which represent the operation;
at least one electronic circuit arrangement comprising a radio communication circuit, a control circuit which is connected or can be connected to the operator control arrangement, and at least one antenna which is connected or can be connected to the radio communication circuit or which is integrated into the said communication circuit,
wherein the control circuit is designed to transmit wireless control commands to the at least one electronic, electrical, electromechanical or electrohydraulic component of the bicycle by means of the radio communication circuit and the antenna on the basis of electrical signals which are received by the operator control arrangement,
**characterized by** a housing (729; 1280; 1430; 1530) which is held radially on the outside of the handlebar (710; 810; 910; 1010; 1110; 1210; 1310; 1410) with respect to the centre axis of the handlebar and contains the electronic circuit arrangement and the antenna.

2. Drive device according to Claim 1,
**characterized by** a unit which has the operator control arrangement, the control circuit, the radio communication circuit and the antenna and forms a component which is arranged or can be arranged on the handlebar (710; 810; 910; 1110; 1210; 1310; 1410).

3. Drive device according to either of the preceding claims,
**characterized in that** the electronic circuit arrangement is arranged or can be arranged such that it extends around an outer circumference of the handlebar at least in regions.

4. Drive device according to Claim 3,
**characterized in that** the or at least one antenna is arranged or can be arranged on an outer side of the handlebar such that it is offset in relation to a grip (712; 812, 912; 1012; 1212; 1312) of the handlebar (710; 810; 910; 1110; 1210; 1310) in the direction of the centre of the handlebar.

5. Drive device according to Claim 3 or 4,
**characterized in that** a printed circuit board (752; 852; 952; 1052) which is of flexible design at least in regions or the printed circuit boards (755) which are connected by means of flexible conductors (753) extends/extend or can be arranged so as to extend around the outer circumference of the handlebar (710; 810; 910; 1110; 1210; 1310) at least in regions.

6. Drive device according to one of Claims 3 to 5, **characterized in that** the antenna is supported by a/the printed circuit board arrangement of the electronic circuit arrangement, wherein the printed circuit board arrangement is arranged or can be arranged such that it extends around an outer circumference of the handlebar at least in regions.

7. Drive device according to one of Claims 4 to 6, **characterized in that** the housing is mounted or can be mounted on the outer circumference of the handlebar.

8. Drive device according to one of Claims 3 to 6, **characterized in that** the housing (729) has an annular or sleeve-like housing section which extends around the handlebar (710; 810; 910; 1110; 1210; 1310).

9. Drive device according to Claim 8,
**characterized in that** the housing (30; 729) has a receptacle for at least one replaceable battery (750; 850; 950; 1050) by way of which electrical energy can be supplied to the electronic circuit arrangement.

10. Drive device according to Claim 9,
**characterized in that** the receptacle is accessible by opening a housing closure (733) or by disconnecting a plurality of separate housing sections from one another.

11. Drive device according to Claim 1,
**characterized by** a fastening apparatus (722; 1022; 1420; 1422; 1520) which fixes the housing (729; 1280; 1430; 1530) on the handlebar (710; 1010; 1210; 1310; 1410), and preferably surrounds the handlebar (710; 1010; 1210; 1310; 1410) in an annular manner.

12. Drive device according to Claim 11,
**characterized in that** the housing (1280) projects laterally from the fastening apparatus in the direction of the centre of the handlebar.

13. Drive device according to Claim 11 or 12,
**characterized in that** the fastening apparatus (722; 1022; 1420; 1422; 1520) has the operator control arrangement.

14. Bicycle which is equipped with at least one drive device according to one of the preceding claims and with at least one electronic, electrical, electromechanical or electrohydraulic component which can be driven by means of the said drive device.

## Revendications

1. Dispositif de commande d'une bicyclette, lequel dispositif est ou peut être disposé sur le guidon (710 ; 810 ; 910 ; 1010 ; 1110 ; 1210 ; 1310 ; 1410) de la bicyclette et sert à commander sans fil au moins un composant électronique, électrique, électromécanique ou électrohydraulique de la bicyclette, ledit dispositif comprenant :
un ensemble d'actionnement qui comporte au moins un élément d'actionnement (718 ; 818 ; 918 ; 1018 ; 1118 ; 1218; 1318; 1418; 1518) actionnable manuellement et qui est conçu pour répondre à une action de l'élément d'actionnement et délivrer des signaux électriques représentant l'action ;
au moins un ensemble de circuits électroniques comprenant un circuit de radiocommunication, un circuit de commande raccordé ou pouvant être raccordé à l'ensemble d'actionnement et au moins une antenne raccordée ou pouvant être raccordée au circuit de radiocommunication ou intégrée à celui-ci,
le circuit de commande étant conçu pour donner des instructions de commande sans fil à l'au moins un composant électronique, électrique, électromécanique ou électrohydraulique de la bicyclette au moyen du circuit de radiocommunication et de l'antenne sur la base de signaux électriques reçus de l'ensemble d'actionnement, **caractérisé par** un boîtier (729 ; 1280 ; 1430 ; 1530) qui est maintenu radialement à l'extérieur du guidon (710 ; 810 ; 910 ; 1010 ; 1110 ; 1210 ; 1310 ; 1410) par rapport à l'axe central du guidon et qui contient l'ensemble de circuits électroniques et l'antenne.

2. Dispositif de commande selon la revendication 1, **caractérisé par** une unité qui comporte l'ensemble d'actionnement, le circuit de commande, le circuit de radiocommunication et l'antenne et qui forme un composant qui est ou peut être disposé sur le guidon (710 ; 810 ; 910 ; 1110 ; 1210 ; 1310 ; 1410).

3. Dispositif de commande selon l'une des revendications précédentes,
**caractérisé en ce que** l'ensemble de circuits électroniques est ou peut être disposé de manière à s'étendre au moins par endroits tout autour d'une périphérie extérieure du guidon.

4. Dispositif de commande selon la revendication 3, **caractérisé en ce que** l'antenne ou l'au moins une antenne est ou peut être disposée sur un côté extérieur du guidon en étant décalée en direction d'un milieu de guidon par rapport à une poignée (712 ; 812, 912 ; 1012 ; 1212 ; 1312) du guidon (710 ; 810 ; 910 ; 1110 ; 1210 ; 1310).

5. Dispositif de commande selon la revendication 3 ou 4,
**caractérisé en ce qu'**une carte de circuit imprimé (752 ; 852 ; 952 ; 1052), qui est flexible au moins par endroits, ou les cartes de circuit imprimé (755) reliées par le biais de conducteurs flexibles (753) s'étend(ent) au moins par endroits tout autour de la périphérie extérieure du guidon (710; 810; 910 ; 1110 ; 1210 ; 1310) ou peu(ven)t être disposée (s) de manière à s'étendre ainsi.

6. Dispositif de commande selon l'une des revendications 3 à 5,
**caractérisé en ce que** l'antenne est portée par un ensemble/l'ensemble de cartes de circuit imprimé de l'ensemble de circuits électroniques, l'ensemble de cartes de circuit imprimé étant ou pouvant être disposé de manière à s'étendre au moins par endroits tout autour d'une périphérie extérieure du guidon.

7. Dispositif de commande selon l'une des revendications 4 à 6, **caractérisé en ce que** le boîtier est ou peut être enfiché sur la périphérie extérieure du guidon.

8. Dispositif de commande selon l'une des revendications 3 à 6,
**caractérisé en ce que** le boîtier (729) comporte une portion de boîtier annulaire ou en forme de manchon qui s'étend autour du guidon (710 ; 810 ; 910 ; 1110 ; 1210 ; 1310).

9. Dispositif de commande selon la revendication 8, **caractérisé en ce que** le boîtier (30 ; 729) comporte un logement destiné à au moins une batterie remplaçable (750 ; 850 ; 950 ; 1050) avec laquelle l'ensemble de circuits électroniques peut être alimenté en énergie électrique.

10. Dispositif de commande selon la revendication 9, **caractérisé en ce que** le logement est accessible par ouverture d'une fermeture de boîtier (733) ou par séparation d'une pluralité de portions de boîtier distinctes les unes des autres.

11. Dispositif de commande selon la revendication 1, **caractérisé par** un dispositif de fixation (722 ; 1022 ; 1420 ; 1422 ; 1520) qui fixe le boîtier (729 ; 1280 ; 1430; 1530) au guidon (710; 1010; 1210 ; 1310 ; 1410) et qui entoure annulairement de préférence le guidon (710 ; 1010 ; 1210 ; 1310 ; 1410).

12. Dispositif de commande selon la revendication 11, **caractérisé en ce que** le boîtier (1280) fait saillie latéralement du dispositif de fixation vers le milieu de guidon.

13. Dispositif de commande selon la revendication 11 ou 12,
**caractérisé en ce que** le dispositif de fixation (722 ; 1022 ; 1420 ; 1422 ; 1520) comporte l'ensemble d'actionnement.

14. Bicyclette équipée d'au moins un dispositif de commande selon l'une des revendications précédentes et d'au moins un composant électronique, électrique, électromécanique ou électrohydraulique commandable au moyen de celui-ci.
